(19) Europäisches Patentamt
European Patent Office
Office européen des brevets

(11) EP 4 721 967 A1

(12) **EUROPEAN PATENT APPLICATION**
published in accordance with Art. 153(4) EPC

(43) Date of publication:
**08.04.2026 Bulletin 2026/15**

(21) Application number: **24815525.1**

(22) Date of filing: **29.05.2024**

(51) International Patent Classification (IPC):
***B32B 5/28*** *(2006.01)* ***B29B 11/16*** *(2006.01)*
***D04H 3/011*** *(2012.01)* ***D04H 3/04*** *(2012.01)*

(52) Cooperative Patent Classification (CPC):
**B29B 11/16; B32B 5/28; D04H 3/011; D04H 3/04**

(86) International application number:
**PCT/JP2024/019714**

(87) International publication number:
**WO 2024/248044 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023 JP 2023089882**

(71) Applicant: **Kuraray Co., Ltd.**
**Kurashiki-shi, Okayama 710-0801 (JP)**

(72) Inventors:
- **ASO, Yoshifumi**
**Okayama-shi, Okayama 702-8601 (JP)**
- **KUSUDO, Kazumasa**
**Okayama-shi, Okayama 702-8601 (JP)**

(74) Representative: **Müller-Boré & Partner Patentanwälte PartG mbB**
**Friedenheimer Brücke 21**
**80639 München (DE)**

# (54) UNIDIRECTIONAL MATERIAL, FIBER RESIN COMPOSITE, AND VIBRATION-DAMPING MOLDED BODY

(57) Provided is a fiber-resin composite including a unidirectional fiber aggregate of liquid crystal polyester fibers and a matrix resin. The fiber-resin composite includes: a liquid crystal polyester fiber-containing layer containing a unidirectional fiber aggregate of liquid crystal polyester fibers and a matrix resin; and a reinforcing fiber-containing layer containing reinforcing fibers and a matrix resin. The matrix resin in the liquid crystal polyester fiber-containing layer is a hard resin. A single filament fineness of the liquid crystal polyester fibers in the liquid crystal polyester fiber-containing layer is 2.5 dtex or more. The liquid crystal polyester fibers in the liquid crystal polyester fiber-containing layer have a cover factor of 91% or more. A coefficient of variation of thickness of the liquid crystal polyester fibers in the liquid crystal polyester fiber-containing layer is 0.33 or less.

Fig. 3

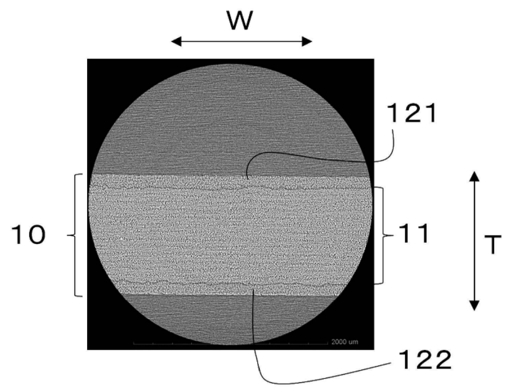


EP 4 721 967 A1

## Description

CROSS REFERENCE TO THE RELATED APPLICATION

This application is based on and claims Convention priority to Japanese patent application No. 2023-089882, filed May 31, 2023, the entire disclosure of which is herein incorporated by reference as a part of this application.

FIELD OF THE INVENTION

The present invention relates to a fiber-resin composite and a molded body having excellent vibration-damping properties, and a unidirectional material that can be contained in the fiber-resin composite and the molded body.

BACKGROUND OF THE INVENTION

It is conventionally known that, for a fiber-reinforced composite material formed from inorganic fibers and a matrix resin, the incorporation of the inorganic fibers enhances the inherent mechanical strength of the matrix resin. Meanwhile, technologies for imparting vibration-damping properties to a composite material in addition to improved strength have been proposed.

For example, Patent Document 1 (Japanese Patent No. 6499029) discloses a sheet-shaped article for producing a vibration-damping member, the sheet-shaped article having outermost surfaces, on at least one of which is disposed a layer containing fully aromatic polyester fibers and a matrix resin.

In addition, Patent Document 2 (WO2015/151919) discloses a fiber-reinforced composite material in which a fiber structure (1) composed only of inorganic fibers and a fiber structure (2) containing fully aromatic polyester fibers are stacked and impregnated with a resin, the fiber-reinforced composite material being characterized in that: an outermost layer of the fiber-reinforced composite material is the fiber structure (1) composed only of the inorganic fibers; and at least one layer of the fiber structure (2) containing the fully aromatic polyester fibers is present as a layer other than a center layer.

CONVENTIONAL ART DOCUMENT

PATENT DOCUMENT

[Patent Document 1] Japanese Patent No. 6499029
[Patent Document 2] WO2015/151919

SUMMARY OF THE INVENTION

PROBLEMS TO BE SOLVED BY THE INVENTION

In Patent Document 1, the sheet-shaped article for producing a vibration-damping member is specifically intended for a plain-woven fabric formed of the fully aromatic polyester fibers, and thus the document does not describe improvement of handleability at all, which is a problem unique to unidirectional fiber aggregates.

The fiber-reinforced composite material of Patent Document 2 has been specifically studied in relation to a unidirectional fiber aggregate formed of the fully aromatic polyester fibers; however, since the fully aromatic polyester fibers used for the unidirectional fiber aggregate are fine fibers having a fineness of 2.3 dtex or less, this fiber-reinforced composite material is insufficient in terms of utilization of vibration-damping performance imparted by the fully aromatic polyester fibers.

Therefore, an object of the present invention is to provide: a unidirectional material using a unidirectional fiber aggregate of liquid crystal polyester fibers, which can improve vibration-damping performance and handleability; and a fiber-resin composite and a molded body containing the unidirectional material.

MEANS FOR SOLVING THE PROBLEMS

The inventors of the present invention have ascertained that it is preferable to use a unidirectional fiber aggregate having a single filament fineness of not less than a predetermined single filament fineness, in order to utilize vibration-damping performance imparted by liquid crystal polyester fibers. Meanwhile, the inventors have found that increase in the

single filament fineness leads to the following drawbacks: in a unidirectional fiber aggregate, the vibration-damping performance varies depending on the fiber orientation of the unidirectional fiber aggregate; and furthermore, when used as a sheet-shaped article, the sheet-shaped article becomes more prone to breakage as the single filament fineness increases. In view of these drawbacks, the inventors have found that the above drawbacks can be solved by a unidirectional fiber aggregate with a specific cover factor and a controlled coefficient of variation of thickness attributable to the unidirectional fiber aggregate. Consequently, the present invention has been completed.

Specifically, the present invention may include the following aspects.

[Aspect 1]

A fiber-resin composite comprising:

a liquid crystal polyester fiber-containing layer containing a unidirectional fiber aggregate of liquid crystal polyester fibers and a matrix resin; and
a reinforcing fiber-containing layer containing reinforcing fibers and a matrix resin, wherein
the matrix resin in the liquid crystal polyester fiber-containing layer is a hard resin,
a single filament fineness of the liquid crystal polyester fibers in the liquid crystal polyester fiber-containing layer is 2.5 dtex or more (preferably 3.5 dtex or more and more preferably 5.0 dtex or more),
the liquid crystal polyester fibers in the liquid crystal polyester fiber-containing layer have a cover factor of 91% or more (preferably 96% or more, more preferably 98% or more, and further preferably 99% or more), and
a coefficient of variation of cover thickness of the liquid crystal polyester fibers in the liquid crystal polyester fiber-containing layer is 0.33 or less (preferably 0.28 or less and more preferably 0.25 or less).

[Aspect 2]

The fiber-resin composite according to aspect 1, wherein the liquid crystal polyester fiber-containing layer as a single layer has a basis weight of 800 g/m$^2$ or less (preferably 15 to 800 g/m$^2$, more preferably 30 to 400 g/m$^2$, further preferably 50 to 300 g/m$^2$, even more preferably 50 to 270 g/m$^2$, particularly preferably 50 to 200 g/m$^2$, and even more particularly preferably 50 to 150 g/m$^2$).

[Aspect 3]

The fiber-resin composite according to aspect 1 or 2, wherein the single filament fineness of the liquid crystal polyester fibers is 5.0 dtex or more.

[Aspect 4]

The fiber-resin composite according to any one of aspects 1 to 3, wherein the matrix resin in the reinforcing fiber-containing layer is a hard resin.

[Aspect 5]

The fiber-resin composite according to any one of aspects 1 to 4, wherein the unidirectional fiber aggregate in the liquid crystal polyester fiber-containing layer as a single layer has a basis weight of 700 g/m$^2$ or less (preferably 10 g/m$^2$ or more and 700 g/m$^2$ or less, more preferably 20 g/m$^2$ or more and 300 g/m$^2$ or less, and further preferably 40 g/m$^2$ or more and less than 180 g/m$^2$).

[Aspect 6]

The fiber-resin composite according to any one of aspects 1 to 5, wherein

the liquid crystal polyester fibers are multifilaments, and
the number of twists in a multifilament is 100 T/m or less (preferably 10 T/m or less and more preferably 8 T/m or less).

[Aspect 7]

The fiber-resin composite according to any one of aspects 1 to 6, wherein the fiber-resin composite has a shape of tape.

[Aspect 8]

A unidirectional material comprising:

a unidirectional fiber aggregate of a liquid crystal polyester fibers; and
a matrix resin, wherein
the matrix resin is a hard resin,
a single filament fineness of the liquid crystal polyester fibers is 2.5 dtex or more (preferably 3.5 dtex or more and more preferably 5.0 dtex or more),
the liquid crystal polyester fibers in the unidirectional material have a cover factor of 91% or more (preferably 96% or more, more preferably 98% or more, and further preferably 99% or more), and
a coefficient of variation of cover thickness of the liquid crystal polyester fibers in the unidirectional material is 0.33 or less (preferably 0.28 or less and more preferably 0.25 or less).

[Aspect 9]

The unidirectional material according to aspect 8, wherein the single filament fineness of the liquid crystal polyester fibers is 5.0 dtex or more.

[Aspect 10]

The unidirectional material according to aspect 8 or 9, wherein the unidirectional fiber aggregate in the unidirectional material has a basis weight of 300 g/$m^2$ or less (preferably 10 g/$m^2$ or more and 300 g/$m^2$ or less, more preferably 25 g/$m^2$ or more and 250 g/$m^2$ or less, further preferably 50 g/$m^2$ or more and less than 180 g/$m^2$, even more preferably 50 g/$m^2$ or more and less than 130 g/$m^2$, and particularly preferably 50 g/$m^2$ or more and less than 100 g/$m^2$).

[Aspect 11]

The unidirectional material according to any one of aspects 8 to 10, wherein

a total fineness of the liquid crystal polyester fibers forming the unidirectional fiber aggregate is 1000 dtex or more, and
the relationship among the total fineness A of the liquid crystal polyester fibers (dtex), the number B of the liquid crystal polyester fibers (fibers/inch), and the number C of twists in each of the liquid crystal polyester fibers (T/m), when expressed as a value of $A \times B \div C$, is 10000 or more (preferably 12000 or more).

[Aspect 12]

The unidirectional material according to any one of aspects 8 to 10, wherein

a total fineness of the liquid crystal polyester fibers forming the unidirectional fiber aggregate is less than 1000 dtex, and
the relationship among the total fineness A of the liquid crystal polyester fibers (dtex), the number B of the liquid crystal polyester fibers (fibers/inch), and the number C of twists in each of the liquid crystal polyester fibers (T/m), when expressed as a value of $A \times B \div C$, is 2000 or more (preferably 3000 or more).

[Aspect 13]

The unidirectional material according to any one of aspects 8 to 12, wherein the unidirectional material has a basis weight of 350 g/$m^2$ or less (preferably 20 to 350 g/$m^2$, more preferably 50 to 300 g/$m^2$, further preferably 100 to 250 g/$m^2$, even more preferably 100 to 200 g/$m^2$, and particularly preferably 100 to 150 g/$m^2$).

[Aspect 14]

The unidirectional material according to any one of aspects 8 to 13, wherein

the liquid crystal polyester fibers are multifilaments, and
the number of twists in a multifilament is 100 T/m or less (preferably 10 T/m or less and more preferably 8 T/m or less).

[Aspect 15]

A vibration-damping molded body comprising the fiber-resin composite according to any one of aspects 1 to 7 or the unidirectional material according to any one of aspects 8 to 14.

[Aspect 16]

A method of producing a fiber-resin composite, the method comprising:
superposing the unidirectional material according to any one of aspects 8 to 14 and a reinforcing fiber sheet containing reinforcing fibers and a matrix resin and performing integral molding.

As used herein, the singular forms, "a", "an", and "the" are intended to include plural forms including "at least one", unless the content clearly indicates otherwise. As used herein, the terms "and/or", "at least one", and "one or more" include any and all combinations of the relevant listed items.

Any combination of at least two constructions disclosed in the appended claims and/or the specification should be construed as included within the scope of the present invention. In particular, any combination of two or more of the appended claims should be equally construed as included within the scope of the present invention.

EFFECT OF THE INVENTION

The present invention makes it possible to improve the handleability of a unidirectional material containing liquid crystal polyester fibers, and furthermore, improve the vibration-damping performance of a fiber-resin composite.

BRIEF DESCRIPTION OF THE DRAWINGS

In any event, the present invention will become more clearly understood from the following description of a preferred embodiment thereof, when taken in conjunction with the accompanying drawings. However, the embodiment and the drawings are given only for the purpose of illustration and explanation, and are not to be taken as limiting the scope of the present invention in any way whatsoever, which scope is to be determined by the appended claims.

[Fig. 1] Fig. 1 is an exploded schematic cross-sectional view for explaining how the layers are stacked during the production of a fiber-resin composite according to one aspect of the present invention.

[Fig. 2] Fig. 2 is a schematic perspective view showing a flat-plate-shaped fiber-resin composite according to the one aspect of the present invention.

[Fig. 3] Fig. 3 shows an enlarged cross-sectional image taken at one of measurement points selected in a fiber-resin composite obtained in Example 1.

[Fig. 4] Fig. 4 is a schematic cross-sectional view for explaining a fiber-resin composite according to one aspect of the present invention.

[Fig. 5] Fig. 5 is a schematic cross-sectional view for explaining a fiber-resin composite according to another aspect of the present invention.

DESCRIPTION OF EMBODIMENT

A fiber-resin composite according to an embodiment of the present invention includes: a liquid crystal polyester fiber-containing layer containing a unidirectional fiber aggregate of liquid crystal polyester fibers and a matrix resin; and a reinforcing fiber-containing layer containing reinforcing fibers and a matrix resin.

(Liquid Crystal Polyester Fiber)

The liquid crystal polyester fiber to be contained in the liquid crystal polyester fiber-containing layer can be produced by, for example, melt-spinning a liquid crystal polyester and furthermore, as necessary, performing solid phase polymerization on as-spun yarns.

The liquid crystal polyester is a polyester that exhibits optical anisotropy (liquid crystallinity) in a melted phase, and can be recognized by, for example, placing a sample on a hot stage to heat the sample under a nitrogen atmosphere and observe light transmitted through the sample using a polarizing microscope. The liquid crystal polyester contains, for example, a constituent unit derived from an aromatic diol, an aromatic dicarboxylic acid, an aromatic hydroxy carboxylic acid, or the like. The constituent unit is not particularly limited in terms of the chemical structure thereof as long as the advantageous effects of the present invention are not impaired. Furthermore, the liquid crystal polyester may contain a constituent unit derived from an aromatic diamine, an aromatic hydroxy amine, or an aromatic aminocarboxylic acid within

such a range as not to impair the advantageous effects of the present invention.

Preferable examples of the constituent units include constituent units indicated in Table 1.

[Table 1]

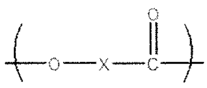 , 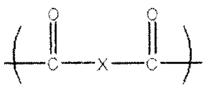 , 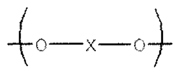 , 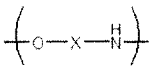

In the formula, X is selected from the following structures.

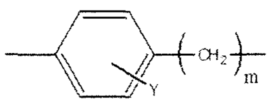 , 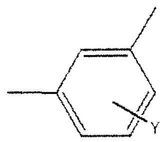 , 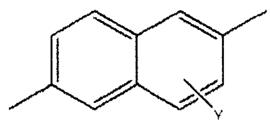 ,

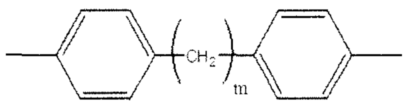 , 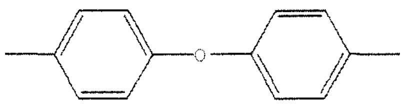 , ,

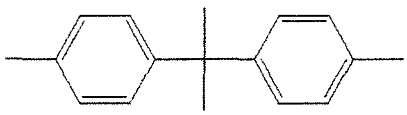 , 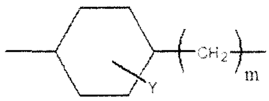 , 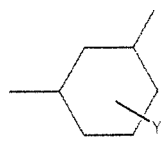

m is an integer from 0 to 2, Y is a substituent selected from hydrogen atom, halogen atoms, alkyl groups, aryl groups, aralkyl groups, alkoxy groups, aryloxy groups, aralkyloxy groups.

Here, the number of existing "Y"s is within a range from 1 to the maximum number that can be substituted on an aromatic ring. "Y"s are each independently selected from the group consisting of hydrogen atom, halogen atoms (e.g., fluorine atom, chlorine atom, bromine atom, and iodine atom), alkyl groups (e.g., alkyl groups each having 1 to 4 carbon atoms, such as methyl group, ethyl group, isopropyl group, and t-butyl group), alkoxy groups (e.g., methoxy group, ethoxy group, isopropoxy group, and n-butoxy group), aryl groups (e.g., phenyl group and naphthyl group), aralkyl groups [benzyl group (phenylmethyl group), phenethyl group (phenylethyl group), and the like], aryloxy groups (e.g., phenoxy group), aralkyloxy groups (e.g., benzyloxy group), and the like.

More preferable examples of the constituent units include constituent units described in examples (1) to (18) indicated in Table 2, Table 3, and Table 4 presented below. If the constituent units in the formulas are constituent units that can have a plurality of structures, a combination of two or more types of such constituent units may be used as a polymer-forming constituent unit.

[Table 2]

| | |
|---|---|
| (1) | 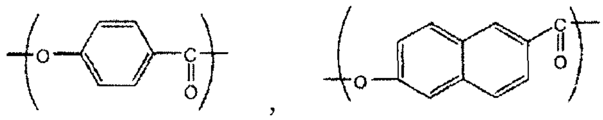 |
| (2) | 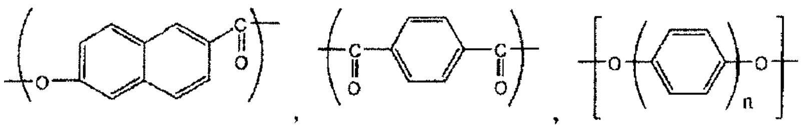 |
| (3) | 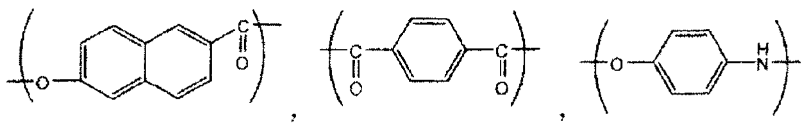 |
| (4) | 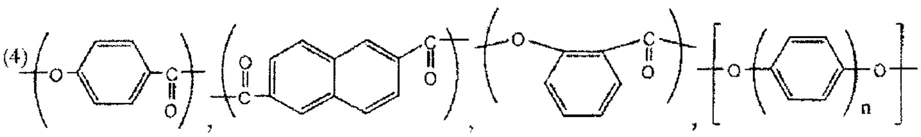 |
| (5) | 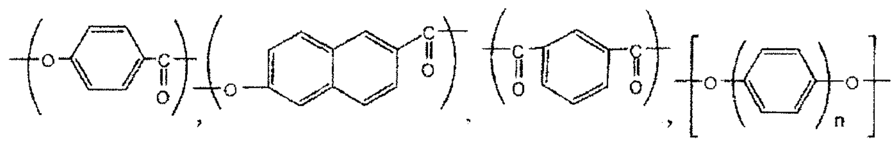 |
| (6) | 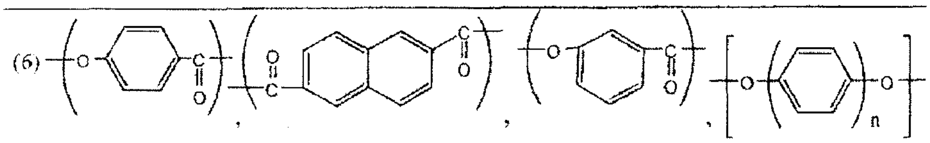 |
| (7) | 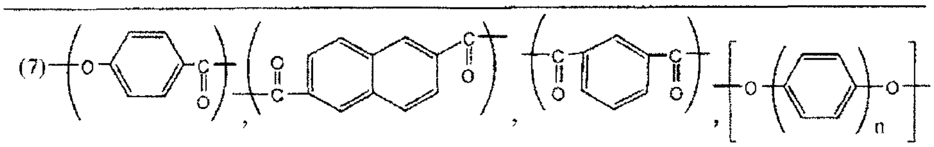 |
| (8) | 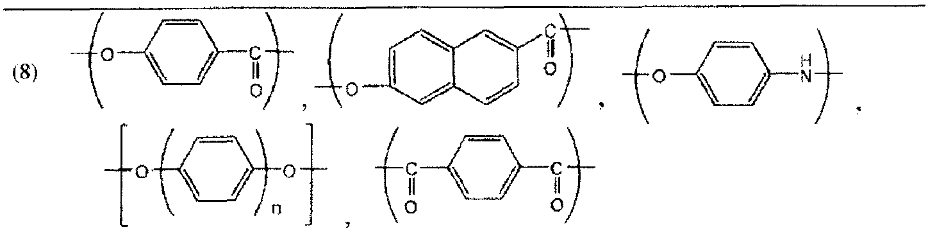 |

[Table 3]

| | |
|---|---|
| (9) | 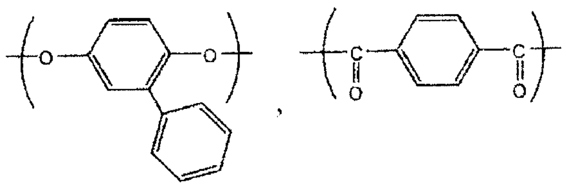 |
| (10) | 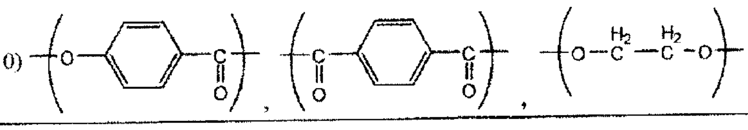 |
| (11) | 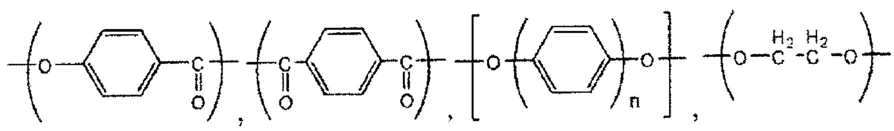 |
| (12) | 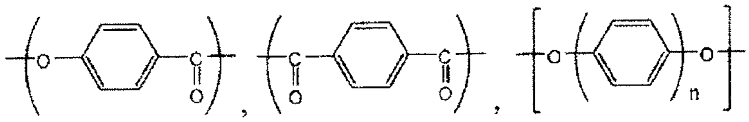 |
| (13) | 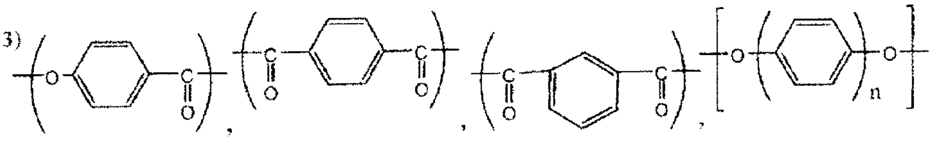 |
| (14) | 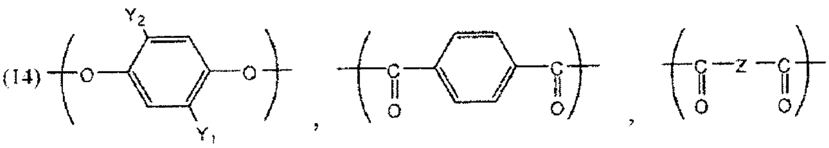 |
| (15) | 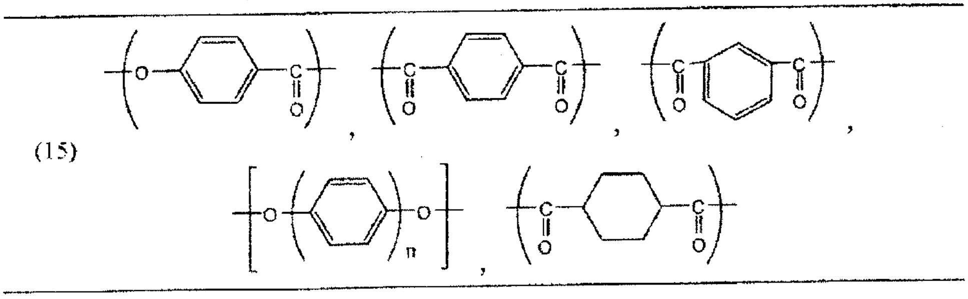 |

[Table 4]

| | |
|---|---|
| (16) | 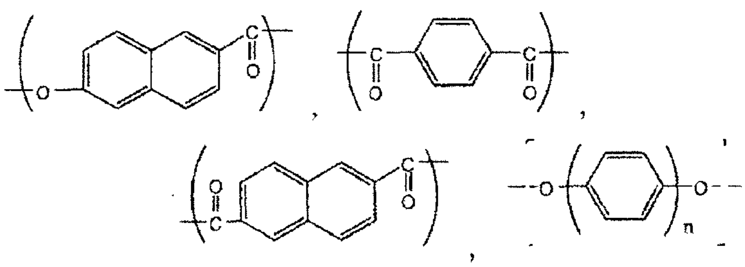 |

(continued)

| | |
|---|---|
| | 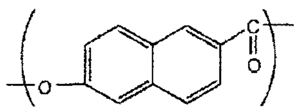 , 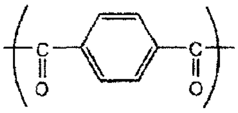 , 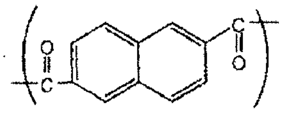 , 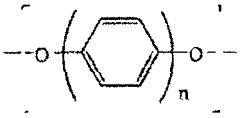 |
| (17) | 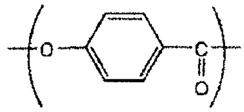 , 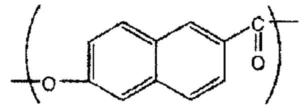 , 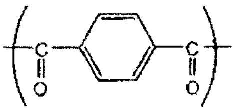 , 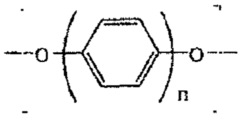 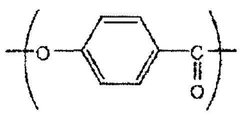 , 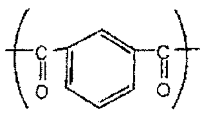 , 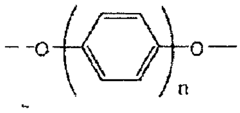 |
| (18) | 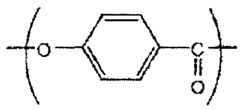 , 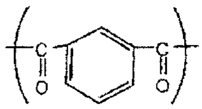 , 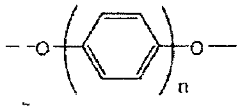 |

In the constituent units in Tables 2, 3, and 4, n represents an integer of 1 or 2, the constituent units in the case of n=1 and in the case of n=2 may be present alone or in combination, and $Y_1$ and $Y_2$ may each independently be hydrogen atom, a halogen atom (e.g., fluorine atom, chlorine atom, bromine atom, or iodine atom), an alkyl group (e.g., an alkyl group having 1 to 4 carbon atoms, such as methyl group, ethyl group, isopropyl group, or t-butyl group), an alkoxy group (e.g., methoxy group, ethoxy group, isopropoxy group, or n-butoxy group), an aryl group (e.g., phenyl group or naphthyl group), an aralkyl group [benzyl group (phenylmethyl group), phenethyl group (phenylethyl group), or the like], an aryloxy group (e.g., phenoxy group), an aralkyloxy group (e.g., benzyloxy group), or the like. Preferable examples of $Y_1$ and $Y_2$ among these groups include hydrogen atom, chlorine atom, bromine atom, and methyl group.

Examples of Z include substituents represented by the following formulas.

[Chem. 1]

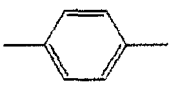 , 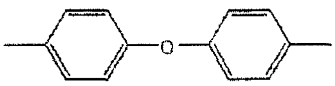 , 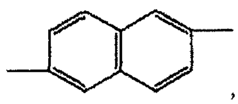 ,

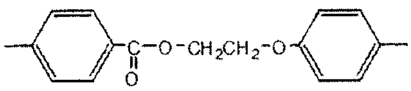 , 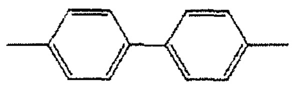

The liquid crystal polyester may preferably be a combination having two or more types of naphthalene backbones as constituent units.

The liquid crystal polyester may preferably contain both a constituent unit (A) derived from a hydroxybenzoic acid and a constituent unit (B) derived from a hydroxynaphthoic acid. Examples of the constituent unit (A) include the following formula (A), and examples of the constituent unit (B) include the following formula (B). From the viewpoint of improving melt-moldability, the ratio of the constituent unit (A) to the constituent unit (B) may be in a range of preferably 9/1 to 1/1, more preferably 7/1 to 1/1, and further preferably 5/1 to 1/1.

[Chem. 2]

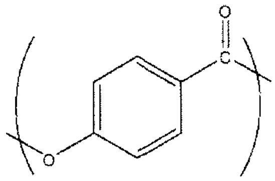

··· (A)

[Chem. 3]

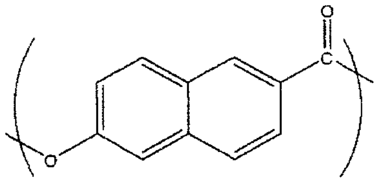

··· (B)

The total amount of the constituent unit (A) and the constituent unit (B) may be, for example, 65 mol% or more, more preferably 70 mol% or more, and further preferably 80 mol% or more with respect to the amount of all constituent units. The liquid crystal polyester particularly preferably contains 4 to 45 mol% of the constituent unit (B) in the polymer thereof.

The liquid crystal polyester suitably used in the present invention has a melting point of preferably 250 to 360°C and more preferably 260 to 320°C. Here, the melting point is a main endothermic peak temperature observed in measurement performed with a differential scanning calorimeter (DSC; "TA3000" manufactured by METTLER TOLEDO) according to the test method of JIS K 7121: 2012. Specifically, 10 to 20 mg of a sample is set in the DSC device and sealed in a pan made of aluminum, then the sample is heated from room temperature (e.g., 25°C) at the rate of 20°C/minute with nitrogen as carrier gas being caused to flow at 100 cc/minute, and an endothermic peak during this heating is measured. A distinct peak might not appear in the first run of the DSC measurement depending on the type of the polymer, and, in this case, the following measurement may be performed. That is, the sample is heated to a temperature higher than an expected flow temperature by 50°C at the heating rate of 50°C/minute and is kept at this temperature for 3 minutes to be completely melted, then the sample is cooled to 50°C at the cooling rate of -80°C/minute, and then an endothermic peak is measured at the heating rate of 20°C/minute.

Thermoplastic polymers such as polyethylene terephthalate, modified polyethylene terephthalate, polyolefin, polycarbonate, polyamide, polyphenylene sulfide, polyether ether ketone, and a fluorine resin may be added to the liquid crystal polyester within such a range as not to impair the advantageous effects of the present invention. In addition, inorganic substances such as titanium oxide, kaolin, silica, or barium oxide; colorants such as carbon black, dyes, and pigments; and various additives such as antioxidants, ultraviolet absorbers, and light stabilizers may be added.

The liquid crystal polyester fiber may be a non-composite fiber or a composite fiber. The cross-sectional shape of the liquid crystal polyester fiber is not particularly limited, and the liquid crystal polyester fiber may be an ordinary fiber having a round cross-sectional shape (also including elliptical cross-sectional shapes) or a fiber having an irregular cross-sectional shape other than the round cross-sectional shape. In the case of a fiber having an irregular cross-sectional shape, the transverse cross-sectional shape thereof may be, for example, any of a rectangular shape, a polygonal shape, a triangular shape, a hollow shape, a flattened shape, a multilobal shape, a cross shape, a dog-bone shape, a Tshape, and a V shape. Such a fiber having an irregular cross-sectional shape is a non-composite fiber in many cases.

Examples of the composite fiber include: a core-sheath composite fiber having a core component which is the liquid crystal polyester and a sheath component which is a bendable thermoplastic resin; and a hybrid composite fiber having a core component which is the liquid crystal polyester and a sheath component having a sea-island structure in which the sea component is a bendable thermoplastic resin and the island component is the liquid crystal polyester.

Examples of the bendable thermoplastic resin include: a resin having no aromatic ring on the main chain thereof; and a resin having aromatic rings on the main chain thereof and having 4 or more atoms on the main chain between the aromatic rings. Specific examples of such resins include: polyolefins; polyamides; polycarbonates; polyphenylene sulfide (abbreviated as PPS); polyesters such as polyethylene terephthalate, modified polyethylene terephthalate, amorphous polyarylate, and polyethylene naphthalate (abbreviated as PEN); polyether ether ketone; and fluorine resins.

The liquid crystal polyester content of the liquid crystal polyester fiber may be 50% by weight or more, preferably 80% by weight or more, more preferably 90% by weight or more, further preferably 95% by weight or more, and even more preferably 99.9% by weight or more.

The liquid crystal polyester fiber may be monofilament or multifilament as long as the advantageous effects of the present invention can be exhibited. From the viewpoint of vibration-damping performance, the liquid crystal polyester fiber may have a single filament fineness of 2.5 dtex or more, preferably 3.5 dtex or more, and more preferably 5.0 dtex or more regardless of whether the liquid crystal polyester fiber is monofilament or multifilament. When the single filament fineness is within the above range, the vibration-damping performance imparted by the liquid crystal polyester fiber can be effectively utilized.

In the case of monofilament, the single filament fineness may be, for example, 2.5 to 100 dtex, preferably 5 to 80 dtex, and more preferably 8 to 60 dtex.

In the case of multifilament, the single filament fineness may be, for example, 2.5 to 20 dtex, preferably 3.5 to 15 dtex, more preferably 5.0 to 10 dtex, and further preferably 5.0 to 7.0 dtex.

In the case where the liquid crystal polyester fiber is multifilament, the total fineness may be set as appropriate according to, for example, the magnitudes of the single filament fineness and the number of twists in the liquid crystal polyester fibers. The total fineness may be, for example, 100 dtex or more, preferably 300 dtex or more, and more preferably 500 dtex or more. The upper limit of the total fineness is not particularly limited, and the total fineness may be, for example, 5000 dtex or less and preferably 3000 dtex or less. In the case of multifilament, the total fineness may be, for example, 100 to 5000 dtex, preferably 300 to 5000 dtex, and more preferably 500 to 3000 dtex.

The number of filaments forming a multifilament may be, for example, 3 or more, preferably 5 or more, more preferably 15 or more, and further preferably 25 or more. The number of the filaments may be set as appropriate according to the single filament fineness and may be 500 or less. From the viewpoint of thinning, the number of the filaments may be preferably 300 or less and more preferably 200 or less. The number of the filaments forming a multifilament may be, for example, 3 to 500, preferably 5 to 500, more preferably 15 to 300, and further preferably 25 to 200.

The multifilament may be subjected to a soft twist (with the number of twists in the multifilament being, for example, 100 T/m or less) but is preferably substantially untwisted (with the number of twists in the multifilament being, for example, 10 T/m or less and preferably 8 T/m or less). By setting the number of twists to be within the above range, a high cover factor and a small coefficient of variation of cover thickness can be obtained. Furthermore, the multifilament may be subjected to fiber spreading treatment and/or smoothing treatment as necessary. The number of twists is a value measured according to a method explained in EXAMPLES described later. Hereinafter, a multifilament in which the number of twists exceeds 0 T/m (e.g., 0.1 T/m or more) is sometimes referred to as a yarn.

(Unidirectional Fiber Aggregate)

The unidirectional fiber aggregate is a fiber aggregate in which the above-described liquid crystal polyester fibers are aligned in a single direction. The unidirectional fiber aggregate may be stitched with a thread orthogonal to the single direction, as necessary. The proportion of the liquid crystal polyester fibers in the unidirectional fiber aggregate may be, for example, 90% by mass or more, preferably 95% by mass or more, and more preferably 99% by mass or more.

The number of the liquid crystal polyester fibers in the unidirectional fiber aggregate may be set as appropriate according to, for example, the total fineness and the number of twists in the liquid crystal polyester fibers and may be, for example, 5/inch or more, preferably 7/inch or more, and further preferably 10/inch or more. The upper limit of the number of the fibers is not particularly limited, and the number of the fibers may be 100/inch or less, preferably 50/inch or less, more preferably 40/inch or less, and further preferably 20/inch or less. The number of the liquid crystal polyester fibers in the unidirectional fiber aggregate may be, for example, 5 to 100/inch, preferably 7 to 50/inch, more preferably 10 to 40/inch, and further preferably 10 to 20/inch. The number of the fibers is a value measured according to a method explained in EXAMPLES described later.

The unidirectional fiber aggregate may have a basis weight of, for example, 10 g/$m^2$ or more, preferably 25 g/$m^2$ or more, and more preferably 50 g/$m^2$ or more. The upper limit of the basis weight is not particularly limited. However, from the viewpoint of thinning, the basis weight may be, for example, 300 g/$m^2$ or less, preferably 250 g/$m^2$ or less, more preferably less than 180 g/$m^2$, further preferably less than 130 g/$m^2$, and even more preferably less than 100 g/$m^2$. The unidirectional fiber aggregate may have a basis weight of, for example, 10 g/$m^2$ or more and 300 g/$m^2$ or less, preferably 25 g/$m^2$ or more and 250 g/$m^2$ or less, more preferably 50 g/$m^2$ or more and less than 180 g/$m^2$, further preferably 50 g/$m^2$ or more and less than 130 g/$m^2$, and even more preferably 50 g/$m^2$ or more and less than 100 g/$m^2$.

If the unidirectional fiber aggregate has not yet been integrated with the matrix resin, the basis weight can be determined by: aligning the fibers to a width of 50 cm while maintaining the number of the fibers per unit width as used in a unidirectional material, sampling a length of 2 m, and measuring an absolute dry mass after drying at 105°C for 4 hours.

Alternatively, after the unidirectional fiber aggregate is integrated with a matrix resin, the basis weight may be determined by: obtaining a cut-out piece having a predetermined area from the unidirectional material, removing the matrix resin from the cut-out piece by, for example, dissolving the cut-out piece in a solvent; and then dividing the absolute dry mass of the obtained unidirectional fiber aggregate by the area of the cut-out piece.

In the unidirectional fiber aggregate, the number of twists and the number of the fibers may be determined

according to the total fineness of each of the liquid crystal polyester fibers (yarns), for example. In a case where a total fineness of the liquid crystal polyester fibers forming the unidirectional fiber aggregate is 1000 dtex or more, the relationship among the total fineness A of the liquid crystal polyester fibers forming the unidirectional fiber aggregate (dtex), the number B of the liquid crystal polyester fibers (fibers/inch), and the number C of twists in each of the liquid crystal polyester fibers (T/m) may be, when expressed as a value of $A \times B \div C$, for example, 10000 or more and preferably 12000 or more. The upper limit of the value is not particularly limited and may be about 30000.

In general, as the total fineness increases and as the number of the fibers increases, the liquid crystal polyester fibers in the unidirectional material can be more evenly distributed. Furthermore, as the number of twists decreases, the spread per yarn of the liquid crystal polyester fibers in the unidirectional material can be made larger.

Meanwhile, in a case where a total fineness of the liquid crystal polyester fibers forming the unidirectional fiber aggregate is less than 1000 dtex, the above-described value of $A \times B \div C$ may be 2000 or more and preferably 3000 or more. The upper limit of the value is not particularly limited and may be about 5000.

That is, in a case where the total fineness of each liquid crystal polyester fiber is small, the number of twists in a yarn can be deliberately increased to increase the number of the fibers. As a result, the liquid crystal polyester fibers can be evenly distributed in the unidirectional material.

(Hard Resin)

The matrix resin in the liquid crystal polyester fiber-containing layer is a hard resin. As long as a durometer hardness is 90 or more as an example, the hard resin is not particularly limited and may be any of thermoplastic resins or thermosetting resins. These types of resins may be used singly, or two or more of these types of resins may be used in combination. Here, the durometer hardness means a value measured according to JIS K 6253-3: 2012 (type A, for generally-used rubber, spring load value: 550-8050 mN, needle shape: 35° truncated cone having a tip diameter of 0.79 mm, pressing needle height: 2.50 mm). By using a hard resin as the matrix resin in the liquid crystal polyester fiber-containing layer, the fiber-resin composite can exhibit vibration-damping properties while rigidity can be imparted thereto. The hard resin content in the matrix resin in the liquid crystal polyester fiber-containing layer may be 50% by mass or more and may be preferably 70% by mass or more, more preferably 90% by mass or more, and particularly preferably 100% by mass, i.e., the matrix resin in the liquid crystal polyester fiber-containing layer is particularly preferably composed only of a hard resin. As the hard resin, resins presented below as examples and the like are preferably used.

Examples of the thermoplastic resins include: polyester-based resins (e.g., polyethylene terephthalate, modified polyethylene terephthalate, polybutylene terephthalate, and polyethylene naphthalate), polyolefin-based resins (e.g., polypropylene, modified polypropylene, and polyethylene), polyamide-based resins (e.g., aliphatic polyamides such as polyamide 6, polyamide 66, polyamide 12, and polyamide 6-12, semi-aromatic polyamides such as polyamide 9T and polyamide 66IT, and alicyclic polyamides), styrene-based resins (e.g., polystyrene), polycarbonate-based resins, (meth) acrylic-based resins, polyether-based resins, ionomer resins (e.g., olefin-based ionomers and fluorine-based ionomers), polyetherimide-based resins, polyphenylene sulfide-based resins, and polyether ketone-based resins (e.g., PEEK and PEK).

Examples of the thermosetting resins include: phenol-based resins (novolac phenol resins and resol phenol resins), epoxy-based resins, vinyl ester-based resins, unsaturated polyester-based resins, cyanate-based resins, crosslinked methacrylic-based resins, melamine-based resins, diallylphthalate-based resins, silicone-based resins, maleimide-based resins, and polyimide-based resins.

A matrix resin can be selected, as appropriate, as the matrix resin of the liquid crystal polyester fiber-containing layer according to, for example, the type of the matrix resin of the reinforcing fiber-containing layer. For example, from the viewpoint of vibration-damping performance, the resin may preferably be any of thermosetting resins. Among the thermosetting resins, epoxy-based resins, polyimide-based resins, unsaturated polyester-based resins, cyanate-based resins, and the like are preferable.

The proportion of the liquid crystal polyester fibers contained per liquid crystal polyester fiber-containing layer may be, for example, 10% by weight or more, preferably 13% by weight or more, and more preferably 15% by weight or more. Meanwhile, the proportion may be 80% by weight or less and preferably 70% by weight or less. The proportion of the liquid crystal polyester fiber contained per liquid crystal polyester fiber-containing layer may be, for example, 10 to 80% by weight, preferably 13 to 80% by weight, and more preferably 15 to 70% by weight.

(Unidirectional Material)

The unidirectional material contains the unidirectional fiber aggregate of the liquid crystal polyester fibers and the hard resin as a matrix resin.

Therefore, the unidirectional material has the above features such as the number of the fibers and the basis weight described in the section "Unidirectional Fiber Aggregate".

A method for integration with the unidirectional fiber aggregate can be selected according to the type of the matrix resin. For example, in a case where the matrix resin is a thermosetting resin, the unidirectional fiber aggregate may be impregnated with the thermosetting resin dissolved in a solvent, or the thermosetting resin dissolved in a solvent may be applied to the unidirectional fiber aggregate to obtain a unidirectional material that is provisionally formed into the shape of a sheet. Alternatively, a semi-cured sheet-shaped article of the thermosetting resin may be superposed onto the unidirectional fiber aggregate to obtain a unidirectional material that is provisionally formed into the shape of a sheet.

In a case where the matrix resin is a thermoplastic resin, the unidirectional fiber aggregate may be impregnated with the thermoplastic resin melted in advance, or the thermoplastic resin melted in advance may be applied to the unidirectional fiber aggregate to obtain a unidirectional material that is provisionally formed into the shape of a sheet. Alternatively, a sheet-shaped article of the thermoplastic resin may be superposed onto the unidirectional fiber aggregate and be subjected to heat-compression to obtain a unidirectional material in which the thermoplastic resin and the unidirectional fiber aggregate are integrated.

In the unidirectional material, the unidirectional fiber aggregate is distributed to have a cover factor of 91% or more, and the cover factor may be preferably 96% or more, more preferably 98% or more, and further preferably 99% or more. The upper limit of the cover factor may preferably be 100%. Here, the cover factor means the proportion of measurement points where the liquid crystal polyester fibers are present to all measurement points that are set at every 100 $\mu$m over a width of 2 mm of the unidirectional fiber aggregate of the liquid crystal polyester fibers in the unidirectional material. Hereinafter, the cover factor of the unidirectional fiber aggregate in the unidirectional material is sometimes simply referred to as the cover factor of the unidirectional material.

Along with this, a thickness (cover thickness) of the liquid crystal polyester fibers can be measured at each of the measurement points used for measuring the cover factor.

The cover factor and the cover thickness are values measured according to methods explained in EXAMPLES described later.

Control of the cover factor of the unidirectional material makes it possible to, in a case where the matrix resin is a thermosetting resin, prevent tearing of a prepreg or the like, for example, whereby the handleability of the unidirectional material can be improved. Meanwhile, in a case where the matrix resin is a thermoplastic resin, disarray of the fibers of the unidirectional fiber aggregate can be prevented, whereby the handleability of the unidirectional material can be improved. The cover factor of the unidirectional material can be measured according to a method employed in measurement for the fiber-resin composite described later.

The cover factor can be set to fall within a desired range by appropriately adjusting, for example, not only the basis weight of the unidirectional fiber aggregate but also the number of twists in the liquid crystal polyester fibers, and the relationship among the total fineness of the liquid crystal polyester fibers, the number of the liquid crystal polyester fibers, and said number of twists.

In order to measure the cover factor of the unidirectional material, measurement may be performed to the unidirectional material as it is, as long as the state of the unidirectional fiber aggregate in the unidirectional material can be maintained. However, from the viewpoint of fixing the aligned state of the unidirectional fiber aggregate, measurement may be performed by using an article obtained by entirely embedding the unidirectional material in a resin or the like and temporarily fixing the unidirectional material. In a case where the liquid crystal polyester fiber-containing layer in the fiber-resin composite is formed from a single layer of the unidirectional material, a cover factor determined in the liquid crystal polyester fiber-containing layer present in the fiber-resin composite may be directly used.

A coefficient of variation of cover thickness of the unidirectional fiber aggregate in the unidirectional material is 0.33 or less. The coefficient of variation of cover thickness may be preferably 0.28 or less and more preferably 0.25 or less, and adjustment of the coefficient of variation of cover thickness to become small makes it possible to improve toughness. The coefficient of variation can be calculated by dividing a variation (standard deviation) of cover thickness by a cover thickness (average value).

The coefficient of variation of cover thickness can be set to fall within the above range by appropriately adjusting, for example, the number of twists in the liquid crystal polyester fibers, and the relationship among the total fineness of the liquid crystal polyester fibers, the number of the liquid crystal polyester fibers, and said number of twists.

The cover thickness (average value) of the unidirectional fiber aggregate in the unidirectional material is preferably small and may be, for example, 300 $\mu$m or less, preferably 250 $\mu$m or less, and more preferably 200 $\mu$m or less. The lower limit of the cover thickness is not particularly limited, and the cover thickness may be 5 $\mu$m or more, 15 $\mu$m or more, or 100 $\mu$m or more. The cover thickness may be, for example, 5 to 300 $\mu$m, preferably 15 to 250 $\mu$m, and more preferably 100 to 200 $\mu$m. By the cover thickness being within the above range, freedom in the number of the unidirectional materials to be stacked, the direction of the stacking, and design regarding the stacking can be enhanced.

The unidirectional material may be used as a sheet-shaped article or a tape-shaped article. In the case of a tape-shaped article, the width thereof may be set as appropriate according to use and may be, for example, 0.5 to 20 mm, preferably 0.8 to 10 mm, and more preferably 1 to 6 mm.

The thickness of the unidirectional material may be selected as appropriate according to, for example, the

thickness of another member and may be, for example, 0.01 to 0.4 mm, preferably 0.03 to 0.3 mm, and more preferably 0.05 to 0.2 mm from the viewpoint of thinning. The thickness of the unidirectional material is a value measured according to a method explained in EXAMPLES described later.

From the viewpoint of thinning, the unidirectional material may have a basis weight of, for example, 350 g/$m^2$ or less, preferably 300 g/$m^2$ or less, and more preferably 250 g/$m^2$ or less, 200 g/$m^2$ or less, or 150 g/$m^2$ or less, and meanwhile, may be, for example, 20 g/$m^2$ or more, preferably 50 g/$m^2$ or more, and more preferably 100 g/$m^2$ or more. The basis weight of the unidirectional material may be, for example, 20 to 350 g/$m^2$, preferably 50 to 300 g/$m^2$, more preferably 100 to 250 g/$m^2$, further preferably 100 to 200 g/$m^2$, and even more preferably 100 to 150 g/$m^2$.

(Liquid Crystal Polyester Fiber-Containing Layer)

The number of the liquid crystal polyester fiber-containing layers in the fiber-resin composite may be one or may be two or more. Furthermore, each of the liquid crystal polyester fiber-containing layers may be formed from one unidirectional material or may be formed from a plurality of unidirectional materials. For example, the number of the unidirectional materials per liquid crystal polyester fiber-containing layer may be selected as appropriate from between one to six.

The total basis weight of the liquid crystal polyester fiber-containing layer in the fiber-resin composite is not particularly limited. In one example in which the composite has a thickness of 1.5 mm or more, the total basis weight may be 30 g/$m^2$ or more, preferably 60 g/$m^2$ or more, and more preferably 100 g/$m^2$ or more. Meanwhile, the total basis weight may be, for example, 1000 g/$m^2$ or less, preferably 800 g/$m^2$ or less, and more preferably 700 g/$m^2$ or less. The total basis weight may be, for example, 30 to 1000 g/$m^2$, preferably 60 to 800 g/$m^2$, and more preferably 100 to 700 g/$m^2$.

In another example in which the fiber-resin composite has a thickness of less than 1.5 mm, the total basis weight of the liquid crystal polyester fiber-containing layer in the fiber-resin composite may be, for example, 15 g/$m^2$ or more, preferably 30 g/$m^2$ or more, and more preferably 50 g/$m^2$ or more from the viewpoint of improving vibration-damping properties of the composite. Meanwhile, the total basis weight may be, for example, 700 g/$m^2$ or less, preferably 600 g/$m^2$ or less, and more preferably 550 g/$m^2$ or less. The total basis weight may be, for example, 15 to 700 g/$m^2$, preferably 30 to 600 g/$m^2$, and more preferably 50 to 550 g/$m^2$.

Here, in a case where the fiber-resin composite has a plurality of the liquid crystal polyester fiber-containing layers, the total basis weight of the liquid crystal polyester fiber-containing layers is a value as the total amount of the liquid crystal polyester fiber-containing layers. In the case of determining the basis weights of the liquid crystal polyester fiber-containing layers contained in the fiber-resin composite, the total basis weight can be calculated by: cutting out the liquid crystal polyester fiber-containing layers one by one from the fiber-resin composite; and obtaining the sum of the basis weights of the respective liquid crystal polyester fiber-containing layers having been cut out.

The basis weight of the liquid crystal polyester fiber-containing layer as a single layer is not particularly limited and may be 15 g/$m^2$ or more, preferably 30 g/$m^2$ or more, and more preferably 50 g/$m^2$ or more. Meanwhile, this basis weight may be, for example, 800 g/$m^2$ or less, preferably 400 g/$m^2$ or less, more preferably 300 g/$m^2$ or less, further preferably 270 g/$m^2$ or less, even more preferably 200 g/$m^2$ or less, and particularly preferably 150 g/$m^2$ or less. The basis weight of the liquid crystal polyester fiber-containing layer as a single layer may be, for example, 15 to 800 g/$m^2$, preferably 30 to 400 g/$m^2$, more preferably 50 to 300 g/$m^2$, further preferably 50 to 270 g/$m^2$, even more preferably 50 to 200 g/$m^2$, and particularly preferably 50 to 150 g/$m^2$. Adjustment of the basis weight of the liquid crystal polyester fiber-containing layer as a single layer makes it possible to efficiently control damping of vibration that occurs in the composite.

Furthermore, the unidirectional fiber aggregate in the liquid crystal polyester fiber-containing layer as a single layer may have a basis weight of, for example, 10 g/$m^2$ or more, preferably 20 g/$m^2$ or more, and more preferably 40 g/$m^2$ or more. Meanwhile, this basis weight may be 700 g/$m^2$ or less, preferably 300 g/$m^2$ or less, and more preferably less than 180 g/$m^2$. The basis weight of the unidirectional fiber aggregate in the liquid crystal polyester fiber-containing layer as a single layer may be, for example, 10 g/$m^2$ or more and 700 g/$m^2$ or less, preferably 20 g/$m^2$ or more and 300 g/$m^2$ or less, and more preferably 40 g/$m^2$ or more and less than 180 g/$m^2$.

(Reinforcing Fiber-Containing Layer)

As long as the matrix resin of the reinforcing fiber-containing layer can be reinforced, the reinforcing fibers to be contained in the reinforcing fiber-containing layer are not particularly limited and may be any of organic fibers or inorganic fibers. One type of fiber may be used, or two or more types of fibers may be used in combination. Examples of the inorganic fibers include glass fiber, carbon fiber, various types of ceramic fiber (e.g., silicon carbide fiber, silicon nitride fiber, silica fiber, alumina fiber, zirconia fiber, boron fiber, and basalt fiber), and various types of metal fiber (e.g., gold, silver, copper, iron, nickel, titanium, potassium titanate, and stainless steel). Examples of the organic fibers include polyparaphenylene benzobisoxazole fiber (PBO fiber), polyphenylene sulfide fiber, aramid fiber (para-based aramid fiber and meta-based aramid fiber), liquid crystal polyester fiber (excluding the unidirectional fiber aggregate of the liquid crystal polyester fibers),

polysulfonamide fiber, phenol resin fiber, polyimide fiber, and fluorine fiber. Among these fibers, carbon fiber, glass fiber, alumina fiber, boron fiber, silicon carbide fiber, potassium titanate fiber, stainless steel fiber, PBO fiber, aramid fiber, and the like are preferably used.

The reinforcing fibers may be monofilament or multifilament. The reinforcing fibers may be used as short fibers or long fibers. In the case of short fibers, the reinforcing fibers may be chopped strands. Alternatively, the reinforcing fibers may be in the form of a fabric such as a woven fabric (plain woven fabric or the like), a knitted fabric, a nonwoven fabric, or a non-crimped fabric, or a reinforcing fiber aggregate such as a unidirectional fiber aggregate (excluding the unidirectional fiber aggregate of the liquid crystal polyester fibers).

The single filament fineness of the reinforcing fibers may be selected as appropriate according to, for example, the shape of the filaments and may be, for example, 0.1 to 600 dtex, preferably 0.5 to 500 dtex, and more preferably 1 to 300 dtex.

The total fineness of the reinforcing fibers may be, for example, 100 dtex or more, preferably 300 dtex or more, and more preferably 500 dtex or more. The upper limit of the total fineness is not particularly limited, and the total fineness may be, for example, 5000 dtex or less and preferably 3000 dtex or less.

(Matrix Resin)

The reinforcing fiber-containing layer may contain either a hard resin or a soft resin as a matrix resin. Examples of the hard resin include the hard resins presented as examples in relation to the liquid crystal polyester fiber-containing layer. Examples of the soft resin can include various types of thermoplastic elastomer resins, e.g., polyolefin-based elastomer resins, ethylene-vinyl ester-based copolymers, polyvinyl chloride-based elastomer resins, polyurethane-based elastomer resins, polystyrene-based elastomer resins, polyester-based elastomer resins, polyacrylic-based elastomer resins, polyamide-based elastomer resins, polydiene-based elastomer resins, chlorinated polyethylene-based elastomer resins, and fluorine resin-based elastomer resins.

The reinforcing fiber-containing layer can be formed through a known method according to the shape of the reinforcing fibers and the type of the matrix resin. In one example in which the reinforcing fibers are short fibers, the short fibers may be mixed and used with the matrix resin.

In another example in which the matrix resin is a thermosetting resin, the reinforcing fiber aggregate may be impregnated with the thermosetting resin dissolved in a solvent, or the thermosetting resin dissolved in a solvent may be applied to the reinforcing fiber aggregate to obtain a reinforcing fiber sheet material that is provisionally formed into the shape of a sheet. Alternatively, a semi-cured sheet-shaped article of the thermosetting resin may be superposed onto the reinforcing fiber aggregate to obtain a reinforcing fiber sheet material that is provisionally formed into the shape of a sheet.

Meanwhile, in a case where the matrix resin is a thermoplastic resin, the reinforcing fiber aggregate may be impregnated with the thermoplastic resin melted in advance, or the thermoplastic resin melted in advance may be applied to the reinforcing fiber aggregate to obtain a reinforcing fiber sheet material that is provisionally formed into the shape of a sheet. Alternatively, a sheet-shaped article of the thermoplastic resin may be superposed onto the reinforcing fiber aggregate and be subjected to heat-compression to obtain a reinforcing fiber sheet material in which the thermoplastic resin and the reinforcing fiber aggregate are integrated.

(Fiber-Resin Composite)

The fiber-resin composite includes: the liquid crystal polyester fiber-containing layer containing the unidirectional fiber aggregate of the liquid crystal polyester fibers and the matrix resin; and the reinforcing fiber-containing layer containing the reinforcing fibers and the matrix resin. The matrix resin in the liquid crystal polyester fiber-containing layer is a hard resin. A single filament fineness of the liquid crystal polyester fibers in the liquid crystal polyester fiber-containing layer is 2.5 dtex or more. The liquid crystal polyester fibers in the liquid crystal polyester fiber-containing layer have a cover factor of 91% or more. A coefficient of variation of cover thickness of the liquid crystal polyester fibers in the liquid crystal polyester fiber-containing layer is 0.33 or less.

The fiber-resin composite can be obtained by: superposing one or more unidirectional materials and one or more reinforcing fiber sheets; and joining and integrating the one or more unidirectional materials and the one or more reinforcing fiber sheets through a known molding process (e.g., thermoforming) according to the types of the matrix resins and a shape to be obtained.

Fig. 1 is an exploded schematic cross-sectional view for explaining how the layers are stacked during the production of a fiber-resin composite according to one aspect of the present invention. A fiber-resin composite 10 includes: a reinforcing fiber-containing layer 11 containing the reinforcing fibers and a matrix resin; and liquid crystal polyester fiber-containing layers 121 and 122 respectively disposed on the top and bottom sides of the reinforcing fiber-containing layer.

Here, the liquid crystal polyester fiber-containing layer 121 is formed by superposing and integrating two unidirectional materials 121a and 121b, and the liquid crystal polyester fiber-containing layer 122 is formed by superposing

two unidirectional materials 122a and 122b. In a case where a liquid crystal polyester fiber-containing layer is formed by superposing and integrating a plurality of unidirectional materials, the liquid crystal polyester fiber-containing layer is regarded as a single layer. Each of the unidirectional materials contains a unidirectional fiber aggregate 200 of the liquid crystal polyester fibers.

The reinforcing fiber-containing layer 11 is formed by superposing and integrating four reinforcing fiber sheets 11a, 11b, 11c, and 11d. Each of the reinforcing fiber sheets contains a reinforcing fiber aggregate 300.

In formation of the fiber-resin composite, the liquid crystal polyester fibers contained in adjacent ones of the unidirectional materials may be integrated. For example, the unidirectional fiber aggregates 200 of the liquid crystal polyester fibers contained in the respective unidirectional materials 121a and 121b may be integrated in the liquid crystal polyester fiber-containing layer 121.

Although the unidirectional fiber aggregates 200 and the reinforcing fiber aggregates 300 are depicted as having shapes protruding from the matrix resins in Fig. 1, it is not necessary that the unidirectional fiber aggregates and the reinforcing fiber aggregates protrude from the matrix resins.

Also, although each of the matrix resins and the corresponding unidirectional fiber aggregate are clearly distinguished from each other in the drawing, there is a case where, in the composite, the plurality of adjacent unidirectional materials are recognized as having been integrated, and the unidirectional fiber aggregates present in these respective unidirectional materials are recognized as having been integrated, for example. For example, as for the liquid crystal polyester fiber-containing layer 121 in which the unidirectional materials 121a and 121b are integrated, in many cases, the individual unidirectional fiber aggregates 200 are integrated to such an extent as to be indistinguishable from each other based on the appearances thereof.

At the time of superposing the unidirectional materials and the reinforcing fiber sheets, materials in which fibers are aligned in one direction may be stacked such that the longitudinal directions of the fibers of the respective materials intersect with each other.

In the case of molding the fiber-resin composite through, for example, thermoforming, the heating temperature may be set as appropriate according to the type of each of the matrix resins, for example.

In the case of a thermosetting resin, any of known technologies may be used to preferably perform molding at a temperature of not less than a thermosetting temperature and completely cure the thermosetting resin. At the time of heating, the heating temperature may be raised in multiple steps before reaching the thermosetting temperature, as necessary. The thermosetting temperature may be set as appropriate according to the type of the resin.

In the case of a thermoplastic resin, any of known technologies may be used to preferably perform molding at a temperature of not less than a melting point or a heat deflection temperature of the resin to achieve integration. At the time of heating, the heating temperature may be raised in multiple steps but preferably be reached in one step. The heating temperature may be preferably (melting point + 50)°C or less or (heat deflection temperature + 50)°C or less.

In the case of compression molding, the pressure may be set as appropriate according to the type of each of the matrix resins, and, in the case of a thermosetting resin, the thermosetting resin may preferably be subjected to compression molding in a semi-cured state to be completely cured. For example, in the case of using a vacuum press forming machine, the pressure may be within a range of 0.3 to 6.0 MPa, preferably 0.5 to 5.0 MPa, and more preferably 0.8 to 4.0 MPa. The pressure may be changed in multiple steps.

In the case of a thermoplastic resin as well, the equivalent pressure may be applied to achieve integration. The pressure may be changed in multiple steps but may preferably be reached in one step.

The ratio (weight ratio) of the unidirectional materials to the reinforcing fiber sheets may be, for example, 2/5 to 1/40, preferably 1/4 to 1/30, and more preferably 1/5 to 1/20, the unidirectional materials and the reinforcing fiber sheets being used in the fiber-resin composite.

Arrangement of the unidirectional materials and the reinforcing fiber sheets, as well as arrangement of each of the liquid crystal polyester fiber-containing layers and the reinforcing fiber-containing layer are not particularly limited. However, from the viewpoint of making it easier to exhibit vibration-damping performance, at least one of the liquid crystal polyester fiber-containing layers may preferably be present on an outer side of the fiber-resin composite.

In each of the liquid crystal polyester fiber-containing layers of the fiber-resin composite, the unidirectional fiber aggregates are distributed to have a cover factor of 91% or more, and may be distributed to have a cover factor of preferably 96% or more, more preferably 98% or more, and further preferably 99% or more. The upper limit of the cover factor is preferably 100%. This cover factor is as described in relation to the cover factor in the aforementioned unidirectional material.

An overview of a method for obtaining the cover factor will be described with reference to Figs. 2 and 3.

Fig. 2 is a schematic perspective view showing a flat-plate-shaped fiber-resin composite according to the one aspect of the present invention. The fiber-resin composite 10 includes: a liquid crystal polyester fiber-containing layer containing the unidirectional fiber aggregate of the liquid crystal polyester fibers and the matrix resin; and the reinforcing fiber-containing layer containing the reinforcing fibers and the matrix resin. In Fig. 2, the longitudinal direction of the fibers of the unidirectional fiber aggregate in the fiber-resin composite 10 is indicated by a double-headed arrow.

The cover factor of the liquid crystal polyester fibers in the liquid crystal polyester fiber-containing layer in the fiber-resin composite is determined as follows. That is, 5 locations are randomly selected in a range from one end to the other end in the longitudinal direction L of the fibers of the unidirectional fiber aggregate, as indicated by broken lines. Using an X-ray CT, a cross-sectional image is taken as a sliced image in a width direction (i.e., a cross-sectional image orthogonal to the longitudinal direction L) at each location, such that the taken cross-sectional image shows the liquid crystal polyester fiber-containing layer over a width of 2 mm. In each of the cross-sectional images taken by using the X-ray CT, the boundary between the layers (e.g., the boundary between the liquid crystal polyester fiber-containing layer and the reinforcing fiber-containing layer) are visually recognizable.

As a reference for the cross-sectional image, Fig. 3 shows an enlarged cross-sectional image taken at one of measured portions selected in a fiber-resin composite obtained in Example 1. In the image of Fig. 3, two liquid crystal polyester fiber-containing layers are arraned as an upper layer 121 and a lower layer 122, respectively disposed on the top and bottom sides the reinforcing fiber-containing layer 11 in the thickness direction T of the fiber-resin composite 10.

First, a portion with a width of 2 mm is randomly selected from each of the liquid crystal polyester fiber-containing layers 121 and 122, and the portion is divided into 20 equal parts at 100 $\mu$m intervals in the width direction W from one end to the other end of the portion. Next, 21 lines are drawn in the thickness direction of the liquid crystal polyester fiber-containing layer at respective 21 points including both ends. However, one end suitable for measurement is used out of the ends. Thus, in actual measurement, the thicknesses of the liquid crystal polyester fiber-containing layer are measured at the remaining 20 points.

In a case where the total number of pieces of data at all the measurement points is defined as N, a cover factor is calculated according to the following formula where n represents the total number of pieces of data at points where no liquid crystal polyester fiber is present among the measurement points.

$$\text{Cover factor (\%)} = [(N-n)/N]\times 100$$

Furthermore, an average and a standard deviation of the thicknesses at the respective measurement points are obtained and are respectively regarded as a thickness (cover thickness) and its variation of the liquid crystal polyester fibers in the liquid crystal polyester fiber-containing layer. More specifically, the cover thickness and the variation of cover thickness are values measured according to methods explained in EXAMPLES described later.

The liquid crystal polyester fiber-containing layer of the fiber-resin composite may have a coefficient of variation of cover thickness of 0.33 or less, preferably 0.28 or less, and more preferably 0.25 or less. The coefficient of variation can be calculated by dividing the variation in the cover thickness by the cover thickness.

The fiber-resin composite may have a basis weight of, for example, 200 g/m$^2$ or more, preferably 500 g/m$^2$ or more, and more preferably 700 g/m$^2$ or more. Meanwhile, the basis weight may be, for example, 20000 g/m$^2$ or less, preferably 18000 g/m$^2$ or less, and more preferably 15000 g/m$^2$ or less. The basis weight of the fiber-resin composite may be, for example, 200 to 20000 g/m$^2$, preferably 500 to 18000 g/m$^2$, and more preferably 700 to 15000 g/m$^2$.

From the viewpoint of vibration-damping performance, the total basis weight of the unidirectional fiber aggregates of the liquid crystal polyester fibers in the fiber-resin composite may be, for example, 60 g/m$^2$ or more, preferably 80 g/m$^2$ or more, and more preferably 100 g/m$^2$ or more. Meanwhile, the total basis weight may be, for example, 1000 g/m$^2$ or less, preferably 800 g/m$^2$ or less, and more preferably 500 g/m$^2$ or less. The total basis weight of the unidirectional fiber aggregates in the fiber-resin composite may be, for example, 60 to 1000 g/m$^2$, preferably 80 to 800 g/m$^2$, and more preferably 100 to 500 g/m$^2$.

In a case where the fiber-resin composite has a plurality of the liquid crystal polyester fiber-containing layers, e.g., in a case where the reinforcing fiber-containing layer is interposed between the liquid crystal polyester fiber-containing layers such as the liquid crystal polyester fiber-containing layers 121 and 122, the distance between the liquid crystal polyester fiber-containing layers may be, for example, less than 50 $\mu$m, preferably less than 25 $\mu$m, and more preferably less than 10 $\mu$m from the viewpoint of vibration-damping performance and thinning, for example.

The fiber-resin composite of the present invention includes such a liquid crystal polyester fiber-containing layer having a high cover factor, and thus has excellent vibration-damping performance. The content (wt%) of the liquid crystal polyester fiber-containing layer in the fiber-resin composite may preferably be 5 wt% or more, more preferably 10 wt% or more, and further preferably 15 wt% or more. The upper limit of the content (wt%) is not particularly limited, and the content (wt%) may be 90 wt% or less, 80 wt% or less, 70 wt% or less, 60 wt% or less, or 50 wt% or less.

The fiber-resin composite allows decrease in an anisotropy of the vibration-damping performance. For example, in a case where vibration-damping performance tests are performed on test pieces of the fiber-resin composites, the anisotropy is expressed as a value obtained by dividing a vibration-damping ratio of a test piece (0 degrees) by a vibration-damping ratio of another test piece (90 degrees), where the test piece (0 degrees) has a width of 15 mm and a length of 200 mm and has the length direction which corresponds to the alignment direction of the liquid crystal polyester fibers in the fiber-resin composite, and the test piece (90 degrees) has a width of 15 mm and a length of 200 mm and has the length

direction that is orthogonal to the alignment direction of the liquid crystal polyester fibers in the fiber-resin composite. The anisotropy may be, for example, 0.5 or more and preferably 0.6 or more, and meanwhile, may be, for example, 1.5 or less, preferably 1.3 or less, and more preferably 1.1 or less or 0.8 or less. The anisotropy expressed as the value obtained by dividing the vibration-damping ratio of the test piece (0 degrees) by the vibration-damping ratio of the test piece (90 degrees) may be, for example, 0.5 to 1.5, preferably 0.6 to 1.3, more preferably 0.6 to 1.1, and further preferably 0.6 to 0.8.

The vibration-damping ratio (0 degrees) may be, for example, 0.5 or more and preferably 0.6 or more, and meanwhile, may be, for example, 1.5 or less and preferably 1.2 or less. The vibration-damping ratio (0 degrees) may be, for example, 0.5 to 1.5 and preferably 0.6 to 1.2. The vibration-damping performance tests are performed according to a method explained in EXAMPLES described later.

The fiber-resin composite may be used as a sheet-shaped article or a tape-shaped article. In the case of a tape-shaped article, the fiber-resin composite may have a width of, for example, 0.5 to 20 mm, preferably 0.8 to 10 mm, and more preferably 1 to 6 mm, for example.

The thickness of the fiber-resin composite may be selected as appropriate according to use and may be, for example, 40 to 3500 μm and preferably 50 to 3000 μm from the viewpoint of thinning.

The total basis weight of the reinforcing fibers in the fiber-resin composite may be, for example, 500 g/m$^2$ or more, preferably 600 g/m$^2$ or more, more preferably 700 g/m$^2$ or more, and further preferably 800 g/m$^2$ or more from the viewpoint of strength. Meanwhile, the total basis weight may be, for example, 15000 g/m$^2$ or less, preferably 13000 g/m$^2$ or less, more preferably 10000 g/m$^2$ or less, and further preferably 3000 g/m$^2$ or less. The total basis weight of the reinforcing fibers in the fiber-resin composite may be, for example, 500 to 15000 g/m$^2$, preferably 600 to 13000 g/m$^2$, more preferably 700 to 10000 g/m$^2$, and further preferably 800 to 3000 g/m$^2$.

The reinforcing fiber-containing layer in the fiber-resin composite may have a total basis weight of, for example, 500 g/m$^2$ or more, preferably 800 g/m$^2$ or more, and more preferably 1000 g/m$^2$ or more from the viewpoint of strength. Meanwhile, the total basis weight may be, for example, 15000 g/m$^2$ or less, preferably 13000 g/m$^2$ or less, more preferably 10000 g/m$^2$ or less, and further preferably 4000 g/m$^2$ or less. The total basis weight of the reinforcing fiber-containing layer in the fiber-resin composite may be, for example, 500 to 15000 g/m$^2$, preferably 800 to 13000 g/m$^2$, more preferably 1000 to 10000 g/m$^2$, and further preferably 1000 to 4000 g/m$^2$. Here, in a case where the fiber-resin composite has a plurality of the reinforcing fiber-containing layers, the total basis weight of the reinforcing fiber-containing layers is a value as the total amount of the reinforcing fiber-containing layers. In the case of obtaining the basis weights of the reinforcing fiber-containing layers contained in the fiber-resin composite, the total basis weight can be calculated by: cutting out the reinforcing fiber-containing layers one by one from the fiber-resin composite; and obtaining the sum of the basis weights of the respective reinforcing fiber-containing layers having been cut out.

The fiber-resin composite may have a toughness of, for example, 4.5 or more, preferably 5.0 or more, and more preferably 5.1 or more. The upper limit of the toughness is not particularly limited, and the toughness may be, for example, 8.0 or less. The toughness of the fiber-resin composite is a value measured according to a method explained in EXAMPLES described later.

The shape of the fiber-resin composite may be a planar shape (plate shape) or a three-dimensional shape. The three-dimensional shape is not particularly limited and may be, for example, a cylindrical shape, a columnar shape, or a curved shape. In addition, the fiber-resin composite may have a functional layer or the like on at least one of the outermost surfaces thereof. The functional layer refers to a layer formed for the purpose of improving designability, ultraviolet radiation prevention properties, or the like, and examples of the functional layer include coating layers and ultraviolet radiation prevention layers. For these coating layers and ultraviolet radiation prevention layers, known materials may be used.

For example, Fig. 4 is a schematic cross-sectional view for explaining a rod-shaped fiber-resin composite according to one aspect of the present invention. A rod-shaped fiber-resin composite 20 includes: one liquid crystal polyester fiber-containing layer 221 disposed in a surrounding form; and a reinforcing fiber-containing layer 22 disposed inward of the liquid crystal polyester fiber-containing layer 221. In Fig. 4, a portion 212 is hollow. In a preferable aspect, there is at least one liquid crystal polyester fiber-containing layer disposed outward of the reinforcing fiber-containing layer as in Fig. 4. Also, in a preferable aspect, there is a liquid crystal polyester fiber-containing layer as an outermost layer.

Fig. 5 is a schematic cross-sectional view for explaining a plate-shaped fiber-resin composite according to another aspect. A plate-shaped fiber-resin composite 30 includes: a liquid crystal polyester fiber-containing layer 311 disposed as one of the outermost layers; a liquid crystal polyester fiber-containing layer 313 disposed as the other of the outermost layer; and a reinforcing fiber-containing layer 312 interposed between the two liquid crystal polyester fiber-containing layers 311 and 313. In a preferable aspect, there is at least one liquid crystal polyester fiber-containing layer disposed outward of the reinforcing fiber-containing layer as in Fig. 5. Also, in a preferable aspect, the fiber-resin composite has a plate shape and includes a liquid crystal polyester fiber-containing layer as at least one of the outermost layers, and the outermost layers on both sides may be liquid crystal polyester fiber-containing layers.

(Vibration-Damping Molded Body)

A vibration-damping molded body may be a molded body formed from the fiber-resin composite alone or may be a molded body formed from the fiber-resin composite and another member. The vibration-damping molded body may be a molded body formed from the unidirectional material alone or may be a molded body formed from the unidirectional material and another member. Each of these vibration-damping molded bodies has vibration-damping properties derived from the fiber-resin composite. Here, the vibration-damping properties mean properties of decreasing the amplitude of vibration.

The molded body may be produced by interposing a joining member such as an adhesive between the fiber-resin composite and the other member. Alternatively, the molded body formed from the fiber-resin composite and the other member may be produced by integrating an uncured product of the fiber-resin composite and the other member through, for example, heat treatment and/or pressure-bonding treatment.

The other member to be used for the vibration-damping molded body may be selected as appropriate according to use, and examples of the other member include members formed from various types of plastics, metals, wood, rubbers (natural rubber, silicone-based rubber, and the like), leather, artificial leather, fabrics (woven/knitted fabric and nonwoven fabric), paper, and the like. These types of members may be used singly, or two or more of these types of members may be used in combination.

Examples of the vibration-damping molded body include: frames (having, for example, a cylindrical shape) for bicycles; interior panels used in vehicles such as automobiles, trains, and aircraft; housings for home electrical appliances such as hair dryers, refrigerators, and microwave ovens; and elongated articles such as golf clubs and fishing rods.

The vibration-damping molded body can damp vibration owing to the liquid crystal polyester fiber-containing layer.

The liquid crystal polyester fiber-containing layer may be disposed as appropriate according to a source of vibration.

In one example, in the case of an elongated article having one end that serves as a source of vibration, the liquid crystal polyester fiber-containing layer may be arranged at a distance in the length direction from the source of vibration, for example, within a range of a predetermined distance (e.g., 0 to 100 cm, preferably 30 to 100 cm, and more preferably 50 to 100 cm) from the source of vibration.

In another example, in a case where a source of vibration exists outside of the article, a vibration received via air may be regarded as a source of vibration, and the liquid crystal polyester fiber-containing layer may be disposed so as to be present within a range of a predetermined distance (e.g., 5 mm or less, preferably 1 mm or less, and more preferably 0.5 mm or less) from an outermost layer. The vibration-damping molded body may also have a functional layer or the like on an outermost surface thereof. The functional layer refers to a layer formed for the purpose of improving designability, ultraviolet radiation prevention properties, or the like, and examples of the functional layer include coating layers and ultraviolet radiation prevention layers. For these coating layers and ultraviolet radiation prevention layers, known materials may be used.

EXAMPLES

The present invention will be described in more detail below by means of Examples, but the present invention is not limited to these Examples in any manner.

[Example 1]

(Production of Unidirectional Material)

VECTRAN HT1670 dtex (single filament fineness: 5.6 dtex) manufactured by KURARAY CO., LTD. was prepared as liquid crystal polyester fibers (LCP fibers). The LCP fibers were twisted, an oil agent was applied thereto. Then, the liquid crystal polyester fibers were aligned in a single direction to obtain a unidirectional fiber aggregate in which the number of yarns was 12.2 yarns/inch, each yarn having the number of twists of 1.16 T/m.

Next, a mixture of an epoxy resin and a curing agent was applied onto release paper by using a coater to obtain a resin sheet-shaped article. The obtained resin sheet-shaped article was placed and pasted on the unidirectional fiber aggregate of the liquid crystal polyester fibers to obtain a semi-cured unidirectional material. The liquid crystal polyester fibers (unidirectional fiber aggregate) in this unidirectional material had a basis weight of 80 g/m$^2$.

(Production of Composite)

From this unidirectional material, two cut pieces each measuring 200 mm by 200 mm were obtained. A

commercially available reinforcing fiber sheet (carbon fiber prepreg "PYROFIL" manufactured by Mitsubishi Chemical Holdings Corporation, product name: TR350C075S (unidirectional prepreg), single filament fineness: 0.7 dtex, basis weight of reinforcing fiber: 75 g/$m^2$, matrix resin: high-toughness epoxy) was prepared, and 13 pieces of the reinforcing fiber sheet were stacked such that they had the same fiber longitudinal direction. The stacked body was interposed between the two cut pieces in a sandwiched manner such that the stacked body and the two cut pieces had the same fiber longitudinal direction.

The sandwiched body was interposed between a pair of release sheets. In this state, the sandwiched body was pressed by a vacuum press-molding machine at a temperature of 130 C° and at a pressure of 2 MPa for one hour. Consequently, the thermosetting resins were cured, whereby a fiber-resin composite was produced. The liquid crystal polyester fibers in the composite had a basis weight of 160 g/$m^2$.

[Example 2]

A composite was produced in the same manner as in Example 1, except that: the number of the unidirectional materials was changed to 4; the number of the stacked reinforcing fiber sheets was changed to 11; and the 11 stacked reinforcing fiber sheets were interposed between the unidirectional materials, two on each side. Then, evaluation of the composite was performed.

[Example 3]

A composite was produced in the same manner as in Example 1, except that VECTRAN HT560 dtex (single filament fineness: 5.6 dtex) manufactured by KURARAY CO., LTD. was prepared as liquid crystal polyester fibers and was twisted, an oil agent was applied thereto, the liquid crystal polyester fibers were aligned to have the number of yarns of 36.6 yarns /inch, each yarn having the number of twists of 5.32 T/m, and an epoxy resin sheet was pasted thereon to obtain a unidirectional fiber aggregate. Then, evaluation of the composite was performed.

[Example 4]

VECTRAN HT560 dtex (single filament fineness: 5.6 dtex) manufactured by KURARAY CO., LTD. was prepared as liquid crystal polyester fibers and was twisted, an oil agent was applied thereto, the liquid crystal polyester fibers were aligned to have the number of yarns of 36.6 yarns /inch, each yarn having the number of twists of 5.32 T/m, and a polycarbonate resin was applied thereon to obtain a unidirectional material provisionally formed into the shape of a sheet. With this unidirectional material as well, a composite was able to be produced in the same manner as in Example 1.

[Comparative Example 1]

A composite was produced in the same manner as in Example 1, except that VECTRAN HT1670 dtex (single filament fineness: 5.6 dtex) manufactured by KURARAY CO., LTD. was prepared as liquid crystal polyester fibers and was twisted, an oil agent was applied thereto, and a unidirectional material was produced from yarns each having the number of twists of 3.68 T/m. Then, evaluation of the composite was performed.

[Comparative Example 2]

A composite was produced in the same manner as in Example 1, except that VECTRAN HT1670 dtex (single filament fineness: 5.6 dtex) manufactured by KURARAY CO., LTD. was prepared as liquid crystal polyester fibers and was twisted, an oil agent was applied thereto, the liquid crystal polyester fibers were aligned to have the number of yarns of 6.4 yarns/inch, and an epoxy resin sheet was pasted thereon to obtain a unidirectional material. Then, evaluation of the composite was performed.

[Comparative Example 3]

A composite was produced in the same manner as in Example 3, except that VECTRAN HT560 dtex (single filament fineness: 5.6 dtex) manufactured by KURARAY CO., LTD. was prepared as liquid crystal polyester fibers and was twisted, an oil agent was applied thereto, the liquid crystal polyester fibers were aligned to have the number of yarns of 12.2 yarns/inch, and an epoxy resin sheet was pasted thereon to obtain a unidirectional material. Then, evaluation of the composite was performed.

[Comparative Example 4]

A composite was produced in the same manner as in Example 1, except that Kevlar (registered trademark) 1670 dtex (single filament fineness: 1.7 dtex) manufactured by DU PONT-TORAY CO., LTD. was prepared as aramid fibers instead of liquid crystal polyester fibers and was twisted, an oil agent was applied thereto, and a unidirectional material was produced from yarns each having the number of twists of 0.84 T/m. Then, evaluation of the composite was performed.
Various physical properties of the obtained fiber-resin composites are indicated in Table 5.
In each of the above Examples and Comparative Examples, the various physical properties were measured according to the following methods.

[Fineness (dtex)]

A yarn fineness was measured according to JIS L 1013: 2021. A single filament fineness was calculated by dividing the yarn fineness by the number of filaments forming the yarn. The yarn fineness (total fineness) may be measured by: unweaving the fiber aggregate forming the fiber-resin composite; and obtaining a yarn forming the fiber aggregate.

[Number of Twists (T/m)]

The number of twists was calculated by: using a three-core twist counter ST0125 manufactured by MATSUI SEIKI Co., Ltd. to apply a load of 0.03 g/dtex and measure the number of twists in a 50 cm fiber 10 times; and converting the average value of the numbers of twists into a value per meter.

[Basis Weight (g/$m^2$) of Fibers (Fiber Aggregate) in Unidirectional Material]

A basis weight was calculated by: aligning vibration-damping fibers over a width of 50 cm while maintaining the number of the yarns per width for the unidirectional material; collecting the fibers over a length of 2 m; and measuring an absolute dry mass of the fibers after retaining the fibers at 105°C for 4 hours. As the vibration-damping fibers, liquid crystal polyester fibers (LCP fibers) were used in each of Examples 1 to 3 and Comparative Examples 1 to 3, and aramid fibers were used in Comparative Example 4. The same applies to the following description.

[Basis Weights (g/$m^2$) of Unidirectional Material and Reinforcing Fiber Sheet]

A basis weight was calculated by: collecting two test pieces measuring 25 cm by 25 cm from each of the unidirectional material and the reinforcing fiber sheet; measuring the absolute dry masses of the test pieces after retaining the test pieces at 105°C for 4 hours; and obtaining the average value of the absolute dry masses of the two test pieces.

[Thickness of Reinforcing Fiber Sheet]

The thickness of the reinforcing fiber sheets forming the fiber-resin composite was measured using a thickness measurement device according to the A method of JIS L 1096: 2010.

[Total Basis Weight (g/$m^2$) of Vibration-Damping Fiber-Containing Layers, Total Basis Weight (g/$m^2$) of Reinforcing Fiber-Containing Layer, and Basis Weight (g/$m^2$) of Fiber-Resin Composite]

The total basis weight of the vibration-damping fiber-containing layers was calculated as the product of the basis weight of each of the unidirectional materials and the number of the stacked unidirectional materials. The total basis weight of the reinforcing fiber-containing layer was calculated as the product of the basis weight of each of the reinforcing fiber sheets and the number of the stacked reinforcing fiber sheets.
The basis weight of the fiber-resin composite was obtained as the sum of the total basis weight of the vibration-damping fiber-containing layers and the total basis weight of the reinforcing fiber-containing layer.

[Content (wt%) of Vibration-Damping Fiber-Containing Layers in Fiber-Resin Composite]

The content was calculated according to the expression (total basis weight of vibration-damping fiber-containing layers)/(basis weight of fiber-resin composite).

[Conditions for Cross-Sectional Imaging]

The cover factor and the cover thickness of the vibration-damping fibers were determined by analyzing images of the fiber-resin composite captured using the following device and under the following imaging conditions.
Device: X-ray CT "Xradia 520 Versa" manufactured by Carl Zeiss Co., Ltd.
A sample was directly fixed to a jig and was imaged using the above X-ray CT. Regarding an imaging direction, sliced images were outputted in a width direction perpendicular to the alignment direction of the fibers of the unidirectional materials. Regarding imaging conditions, the imaging was performed with the radiation source intensity of 80 kV, with the output of 7 W, and with the pixel size of 3.0 μm, and 3201 images were captured.
Subsequent image analysis was performed using 5 images that were randomly selected from the obtained images (images including the vibration-damping fiber-containing layers each having a width of 2 mm).

[Cover Thickness (mm) and Cover factor (%)]

A portion having a width of 2 mm was randomly selected in each of the 5 captured images that were randomly selected, and the portion was divided into 20 equal parts from one end to the other end of the selected portion. One end was excluded from the 21 points including both ends, and the thickness (cover thickness) of the liquid crystal polyester fibers was measured at each of the remaining 20 measurement points. Regarding the exclusion of an end, if there was an end where measuring the thickness was difficult due to an impaired visual field or the like at that end, that end was preferentially excluded, and, if neither of both ends fell under the exclusion criteria, one of the ends was randomly selected.
In each of the Examples and the Comparative Examples, two (two rows of) vibration-damping fiber-containing layers were present, and thus, presence or absence of the liquid crystal polyester fibers was visually checked and the thicknesses of the liquid crystal polyester fibers were measured at the total of 40 points on these layers (rows) in each of the 5 captured images. The proportion of the total number n of pieces of data at points where no liquid crystal polyester fiber was present among the total of 200 points was calculated as a cover factor according to the following expression.

$$[\text{Cover factor } (\%)] = ([200\text{-}n]/200)\times 100$$

[Average Value of Cover Thicknesses and Coefficient of Variation of Cover Thickness]

An average value and a standard deviation of the cover thicknesses at the total of 200 points measured according to the above method were calculated, and a coefficient of variation was calculated as a value obtained by dividing the standard deviation by the average value.

[Thickness of Composite]

The thicknesses of the composite were measured using a micrometer according to JIS K 7074: 1988. The average value of the thicknesses at 5 locations was regarded as the thickness of the composite.

[Toughness of Composite]

The toughness of the composite was determined as follows. That is, a maximum strength (GPa) and a maximum strain (%) were measured in a test piece which had a sample length of 100 mm and a width of 15 mm and in which the length direction of the test piece corresponded to the alignment direction of the vibration-damping fibers, at an inter-support interval of 40 mm and at a speed of 5 mm/min using a three-point bending jig according to JIS K 7074: 1988. The product of the maximum strength and the maximum strain was calculated as the toughness.

[Vibration-Damping Performance]

Each of the fiber-resin composites obtained in the Examples and the Comparative Examples was cut using a generally-used waterjet cutter to obtain: a test piece (0 degrees) that had a width of 15 mm and a length of 200 mm and had the length direction corresponding to the alignment direction of the vibration-damping fibers; and a test piece (90 degrees) that had a width of 15 mm and a length of 200 mm and had the length direction corresponding to a direction orthogonal to this alignment direction.
The tip of an edge knife was fixed with a quick-setting adhesive to a center portion in the length direction of each of the test pieces, and the edge knife was fixed to an impedance head of an apparatus for center-supported standing wave vibration method.

The apparatus for center-supported standing wave vibration method was placed in a thermostatic chamber (SP-43CI-Amanufactured by KATO Co., Ltd.), and a vibration-damping ratio was measured at 20°C.
The apparatus for center-supported standing wave vibration method included the following devices.

Thermometer: ND500 (manufactured by CHINO Corporation)
FFT analyzer: CF-52202 (manufactured by ONO SOKKI CO., LTD.)
Power amplifier: 371-A (manufactured by EMIC corporation)
Vibration applicator: 512-A (manufactured by EMIC corporation)
Amplifier: 2692-OS2 (manufactured by Brüel & Kjer Inc.)
Impedance head: 8001 (manufactured by Brüel & Kjaer Inc.)

[Anisotropy]

The vibration-damping ratio of the test piece (0 degrees) was divided by the vibration-damping ratio of the test piece (90 degrees), and the resultant value was regarded as an index of an anisotropy based on the vibration-damping ratios. As the above value obtained from the division approaches 1, it indicates that the test piece has reduced anisotropy.

[Handleability of Unidirectional Material]

In a case where the matrix resin was a thermosetting resin, the unidirectional material was temporarily retained in a freezer, then was taken out from the freezer to return the temperature to normal temperature, and then was cut into a cut piece measuring 200 mm by 200 mm. The unidirectional material was evaluated as A if the unidirectional material was not broken or not otherwise flawed upon being peeled from release paper and was able to be collected flawlessly. Meanwhile, the unidirectional material was evaluated as B if the unidirectional material was torn and was difficult to superpose.
In a case where the matrix resin was a thermoplastic resin, the cover factor of the unidirectional fiber aggregate was determined in the unidirectional material provisionally formed into the shape of a sheet by impregnating the unidirectional fiber aggregate with the matrix resin or applying the matrix resin onto the unidirectional fiber aggregate. Consequently, presence or absence of disarray of the fibers of the unidirectional fiber aggregate was able to be ascertained, whereby the handleability of the unidirectional material was able to be evaluated.
The physical properties of the obtained fiber-resin composites are indicated in Table 5.

[Table 5]

| | | | | Example 1 | Example 2 | Example 3 |
|---|---|---|---|---|---|---|
| Unidirectional material | Fiber | Type of fiber | | LCP fiber | LCP fiber | LCP fiber |
| | | Single filament fineness | dtex | 5.6 | 5.6 | 5.6 |
| | | Total fineness | dtex | 1670 | 1670 | 560 |
| | Fiber aggregate | Structure | | Unidirectional | Unidirectional | Unidirectional |
| | | Number of twists | T/m | 1.16 | 1.16 | 5.32 |
| | | Number of yarns | yarns/inch | 12.2 | 12.2 | 36.6 |
| | | Basis weight | $g/m^2$, | 80 | 80 | 80 |
| | | Total fineness*-number of yarns/-number of twists | | 17564 | 17564 | 3853 |
| | Thickness | | mm | 0.10 | 0.10 | 0.10 |
| | Basis weight | | $g/m^2$ | 132.0 | 132.0 | 132.0 |
| Reinforcing fiber sheet | Content of reinforcing fibers | | wt% | 75 | 75 | 75 |
| | Thickness | | mm | 0.062 | 0.062 | 0.062 |
| | Basis weight | | $g/m^2$ | 100 | 100 | 100 |

(continued)

| | | | | Example 1 | Example 2 | Example 3 |
|---|---|---|---|---|---|---|
| Composite | Thickness | | mm | 1.24 | 1.27 | 1.21 |
| | Basis weight | | g/m$^2$ | 1564 | 1628 | 1564 |
| | Basis weight of each vibration-damping fiber-containing layer | | g/m$^2$ | 132 | 264 | 132 |
| | Basis weight of fibers in each vibration-damping fiber-containing layer | | g/m$^2$ | 80 | 160 | 80 |
| | Total basis weight of vibration-damping fiber-containing layers | | g/m$^2$ | 264 | 528 | 264 |
| | Content of vibration-damping fiber-containing layers | | wt% | 16.9 | 32.4 | 16.9 |
| | Total basis weight of reinforcing fiber-containing layers | | g/m$^2$ | 1300 | 1100 | 1300 |
| | Cover factor | | % | 100 | 100 | 100 |
| | Cover thickness (average value) | | μm | 109.1 | 190.4 | 120.6 |
| | Variation of cover thickness (standard deviation) | | - | 21.3 | 12.5 | 23.9 |
| | Coefficient of variation of cover thickness | | | 0.20 | 0.07 | 0.20 |
| Bending physical properties | Maximum strength | | GPa | 1.60 | 1.48 | 1.77 |
| | Maximum strain | | % | 3.1 | 4.4 | 3.0 |
| | Toughness (maximum strength × maximum strain) | | | 5.0 | 6.4 | 5.2 |
| Vibration-damping performance | | Vibration-damping ratio (0 degrees) | | 0.6315 | 1.127 | 0.559 |
| | | Vibration-damping ratio (90 degrees) | | 0.9975 | 1.437 | 0.979 |
| | | Anisotropy | | 0.633 | 0.784 | 0.571 |
| Handleability of unidirectional material | | | | A | A | A |

[Table 5] (cont.)

| | | | | Comparative Example 1 | Comparative Example 2 | Comparative Example 3 | Comparative Example 4 |
|---|---|---|---|---|---|---|---|
| Unidirectional material | Fiber | Type of fiber | | LCP fiber | LCP fiber | LCP fiber | Aramid fiber |
| | | Single filament fineness | dtex | 5.6 | 5.6 | 5.6 | 1.7 |
| | | Total fineness | dtex | 1670 | 1670 | 560 | 1670 |
| | Fiber aggregate | Structure | | Unidirectional | Unidirectional | Unidirectional | Unidirectional |
| | | Number of twists | T/m | 3.68 | 1.16 | 5.32 | 0.84 |
| | | Number of yarns | yams/ inch | 12.2 | 6.4 | 12.2 | 12.2 |
| | | Basis weight | $g/m^2$ | 80 | 42 | 26.9 | 80 |
| | | Total fineness*number of yarns/number of twists | | 5536 | 9214 | 1284 | 24255 |
| | Thickness | | mm | 0.10 | 0.06 | 0.10 | 0.10 |
| | Basis weight | | $g/m^2$ | 132.0 | 95.0 | 60.5 | 135.0 |
| Reinforcing fiber sheet | Content of reinforcing fibers | | wt% | 75 | 75 | 75 | 75 |
| | Thickness | | mm | 0.062 | 0.062 | 0.062 | 0.062 |
| | Basis weight | | $g/m^2$ | 100 | 100 | 100 | 100 |
| Composite | Thickness | | mm | 1.26 | 1.14 | 1.11 | 1.24 |
| | Basis weight | | $g/m^2$ | 1564 | 1490 | 1421 | 1570 |
| | Basis weight of each vibration-damping fiber-containing layer | | $g/m^2$ | 132 | 95 | 60.5 | 135 |
| | Basis weight of fibers in each vibration-damping fiber-containing layer | | $g/m^2$ | 80 | 42 | 26.9 | 80 |
| | Total basis weight of vibration-damping fiber-containing layers | | $g/m^2$ | 264 | 190 | 121 | 270 |
| | Content of vibration-damping fiber-containing layers | | wt% | 16.9 | 12.8 | 8.5 | 17.2 |
| | Total basis weight of reinforcing fiber-containing layers | | $g/m^2$ | 1300 | 1300 | 1300 | 1300 |
| | Cover factor | | % | 95.5 | 90.1 | 90 | 88.2 |
| | Cover thickness (average value) | | μm | 125.7 | 92.8 | 61.5 | 97.7 |
| | Variation of cover thickness (standard deviation) | | - | 45 | 27.1 | 32.4 | 50.1 |
| | Coefficient of variation of cover thickness | | | 0.36 | 0.29 | 0.53 | 0.51 |

(continued)

| | | | Comparative Example 1 | Comparative Example 2 | Comparative Example 3 | Comparative Example 4 |
|---|---|---|---|---|---|---|
| Bending physical properties | Maximum strength | GPa | 1.45 | 1.88 | 1.94 | 1.72 |
| | Maximum strain | % | 2.5 | 2.5 | 2.4 | 2.8 |
| | Toughness (maximum strength × maximum strain) | | 3.6 | 4.7 | 4.6 | 4.8 |
| Vibration-damping performance | Vibration-damping ratio (0 degrees) | | 0.548 | 0.368 | 0.2615 | 0.217 |
| | Vibration-damping ratio (90 degrees) | | 1.025 | 0.837 | 0.759 | 0.876 |
| | Anisotropy | | 0.535 | 0.440 | 0.345 | 0.248 |
| Handleability of unidirectional material | | | B | B | B | A |

As indicated in Table 5, in each of Examples 1 to 3, the cover factor of the liquid crystal polyester fibers (vibration-damping fibers) in the unidirectional material or the liquid crystal polyester fiber-containing layer (vibration-damping fiber-containing layer) is high, and the coefficient of variation of cover thickness of the liquid crystal polyester fibers (vibration-damping fibers) is small. Thus, in each of Examples 1 to 3, even though the single filament fineness of the liquid crystal polyester fibers is high, the unidirectional material or the liquid crystal polyester fiber-containing layer covered by the liquid crystal polyester fibers with an even thickness not only allows the fiber-resin composite to have high values for vibration-damping performance but also allows the fiber-resin composite to have reduced anisotropy.

In addition, the unidirectional material has excellent handleability, and no breakage occurs owing to gaps generated between the fibers of the unidirectional fiber aggregate. As a result, generation of gaps between the fibers in the fiber-resin composite can be suppressed.

Furthermore, the values of the toughness related to flexural properties are 5.0 or more. In comparison between Examples 1 and 3 and Comparative Example 1, each of Examples 1 and 3 with smaller coefficients of variation of cover thicknesses can have improved toughness.

Meanwhile, in Comparative Example 1, although the cover factor is high, the coefficient of variation of cover thickness is high. Thus, in Comparative Example 1, breakage occurs owing to gaps generated between the fibers of the unidirectional fiber aggregate when handling the unidirectional material, and as a result, generation of gaps between the fibers in the fiber-resin composite cannot be suppressed.

In each of Comparative Examples 2 and 3, the cover factor is insufficient. Furthermore, in Comparative Example 3, the coefficient of variation of cover thickness is high as well. Thus, in each of Comparative Examples 2 and 3, the vibration-damping performance in the 0-degree direction is poor, and as a result, anisotropy is exhibited.

Furthermore, breakage occurs owing to gaps generated between the fibers of the unidirectional fiber aggregate when handling the unidirectional material, and as a result, generation of gaps between the fibers in the fiber-resin composite cannot be suppressed.

In Comparative Example 4 in which aramid fibers having a small single filament fineness were used instead of liquid crystal polyester fibers, even though the cover factor and the coefficient of variation of cover thickness are poor, no breakage occurs in the unidirectional material probably because of the small single filament fineness. However, in Comparative Example 4, the vibration-damping performance in the 0-degree direction is poor, and as a result, anisotropy is exhibited.

In addition, in each of the Comparative Examples, the toughness is lower than those in the Examples and has a value of less than 5.0.

## INDUSTRIAL APPLICABILITY

The fiber-resin composite of the present invention may be suitably used for various purposes for which vibration-damping performance is required. For example, the fiber-resin composite is usable for: transport machines such as automobiles, trains, ships, and aircrafts; sporting goods such as bats, tennis rackets, badminton rackets, golf clubs, or fishing rods; acoustic devices such as portable stereo with headphones or a music player; and housings of home electrical appliances such as hair dryers, refrigerators, and microwave ovens, or the like.

Although the present invention has been described above in connection with the preferred embodiment thereof, numerous additions, changes, and deletions can be made without departing from the gist of the present invention. Therefore, such additions, changes, and deletions are also construed as included within the scope of the present invention.

[Reference Numerals]

10, 20, 30 ···· fiber-resin composite
11, 22, 312 ···· reinforcing fiber-containing layer
11a, 11b, 11c, 11d ···· reinforcing fiber sheet
121, 122, 221, 311, 313 ···· liquid crystal polyester fiber-containing layer
121a, 121b, 122a, 122b ···· unidirectional material
200 ···· unidirectional fiber aggregate
300 ···· reinforcing fiber aggregate
L ···· longitudinal direction
W ···· width direction
T ···· thickness direction

## Claims

1. A fiber-resin composite comprising:

   a liquid crystal polyester fiber-containing layer containing a unidirectional fiber aggregate of liquid crystal polyester fibers and a matrix resin; and
   a reinforcing fiber-containing layer containing reinforcing fibers and a matrix resin, wherein
   the matrix resin in the liquid crystal polyester fiber-containing layer is a hard resin,
   a single filament fineness of the liquid crystal polyester fibers in the liquid crystal polyester fiber-containing layer is 2.5 dtex or more,
   the liquid crystal polyester fibers in the liquid crystal polyester fiber-containing layer have a cover factor of 91% or more, and
   a coefficient of variation of cover thickness of the liquid crystal polyester fibers in the liquid crystal polyester fiber-containing layer is 0.33 or less.

2. The fiber-resin composite according to claim 1, wherein the liquid crystal polyester fiber-containing layer as a single layer has a basis weight of 800 $g/m^2$ or less.

3. The fiber-resin composite according to claim 1, wherein the single filament fineness of the liquid crystal polyester fibers is 5.0 dtex or more.

4. The fiber-resin composite according to claim 1, wherein the matrix resin in the reinforcing fiber-containing layer is a hard resin.

5. The fiber-resin composite according to claim 1, wherein the unidirectional fiber aggregate in the liquid crystal polyester fiber-containing layer as a single layer has a basis weight of 700 $g/m^2$ or less.

6. The fiber-resin composite according to claim 1, wherein the number of twists in the liquid crystal polyester fibers is 100 T/m or less.

7. The fiber-resin composite according to claim 1, wherein the fiber-resin composite has a shape of tape.

8. A unidirectional material comprising:

   a unidirectional fiber aggregate of liquid crystal polyester fibers; and
   a matrix resin, wherein
   the matrix resin is a hard resin,
   a single filament fineness of the liquid crystal polyester fibers is 2.5 dtex or more,
   the liquid crystal polyester fibers in the unidirectional material have a cover factor of 91% or more, and
   a coefficient of variation of thickness of the liquid crystal polyester fibers in the unidirectional material is 0.33 or less.

9. The unidirectional material according to claim 8, wherein the single filament fineness of the liquid crystal polyester fibers is 5.0 dtex or more.

10. The unidirectional material according to claim 8, wherein the unidirectional fiber aggregate in the unidirectional material has a basis weight of 300 $g/m^2$ or less.

11. The unidirectional material according to claim 8, wherein

    a total fineness of the liquid crystal polyester fibers forming the unidirectional fiber aggregate is 1000 dtex or more, and
    the relationship among the total fineness A of the liquid crystal polyester fibers (dtex), the number B of the liquid crystal polyester fibers (fibers/inch), and the number C of twists in each of the liquid crystal polyester fibers (T/m), when expressed as a value of $A \times B \div C$, is 10000 or more.

12. The unidirectional material according to claim 8, wherein

a total fineness of the liquid crystal polyester fibers forming the unidirectional fiber aggregate is less than 1000 dtex, and
the relationship among the total fineness A of the liquid crystal polyester fibers (dtex), the number B of the liquid crystal polyester fibers (fibers/inch), and the number C of twists in each of the liquid crystal polyester fibers (T/m), when expressed as a value of $A \times B \div C$, is 2000 or more.

**13.** The unidirectional material according to claim 8, wherein the unidirectional material has a basis weight of 350 $g/m^2$ or less.

**14.** The unidirectional material according to claim 8, wherein the number of twists in the liquid crystal polyester fibers is 100 T/m or less.

**15.** A vibration-damping molded body comprising the fiber-resin composite according to any one of claims 1 to 7 or the unidirectional material according to any one of claims 8 to 14.

**16.** A method of producing a fiber-resin composite, the method comprising:
superposing the unidirectional material according to any one of claims 8 to 14 and a reinforcing fiber sheet containing reinforcing fibers and a matrix resin and performing integral molding.

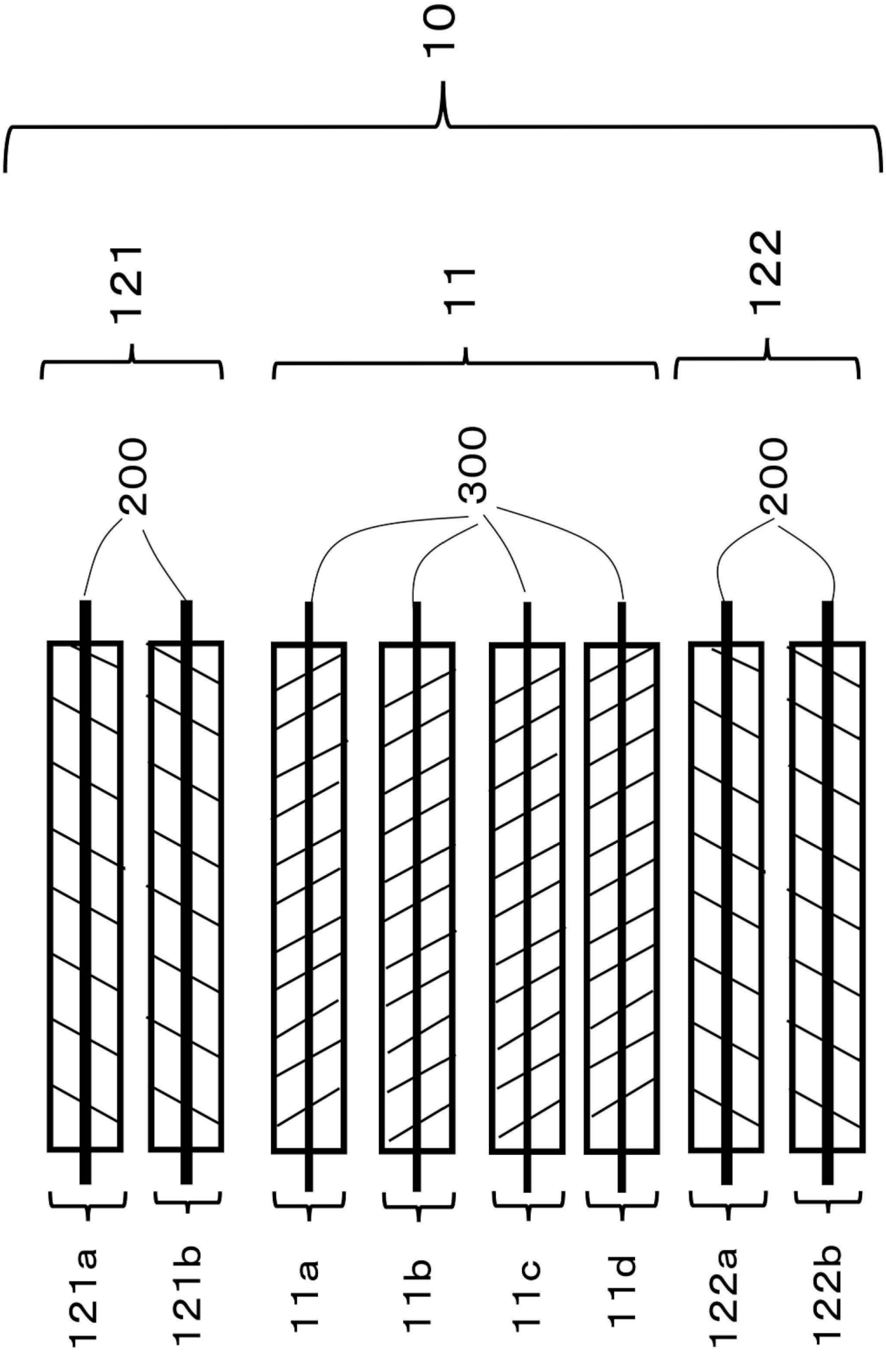


Fig. 1

Fig. 2

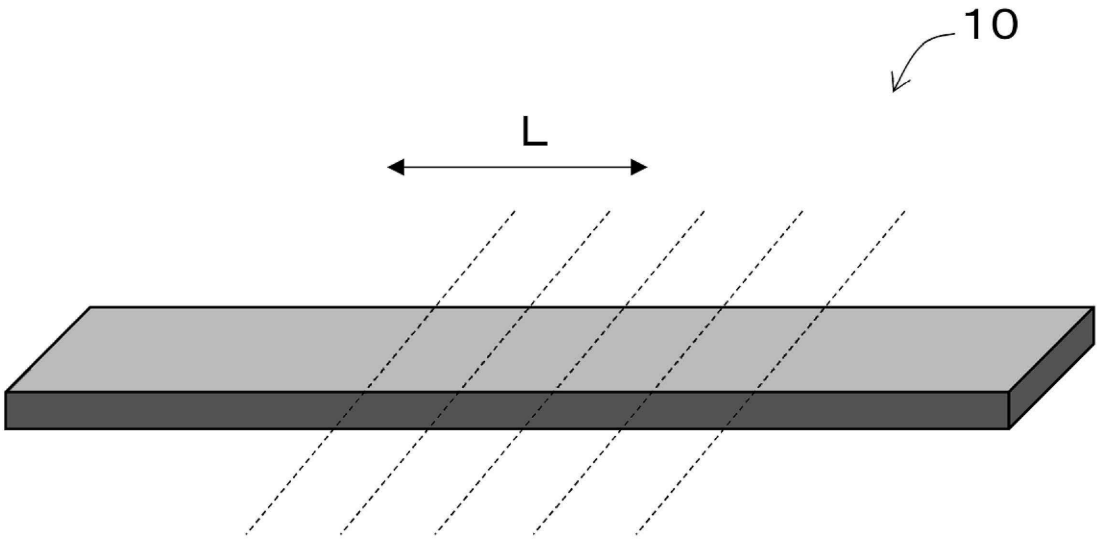


Fig. 3

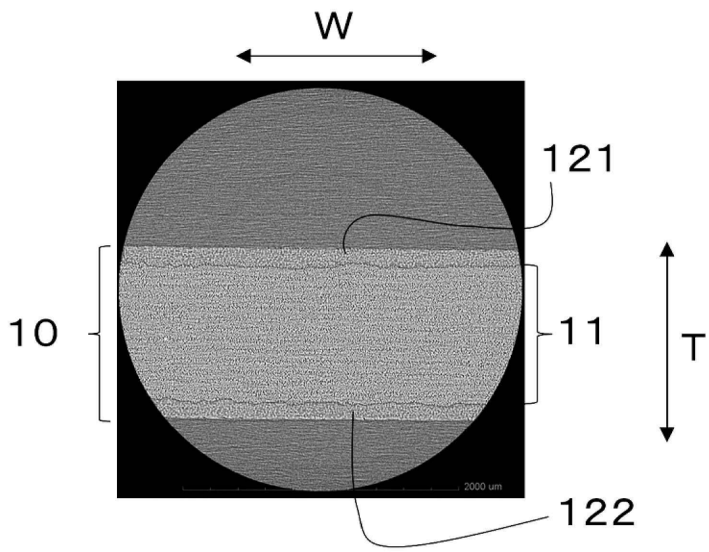

Fig. 4

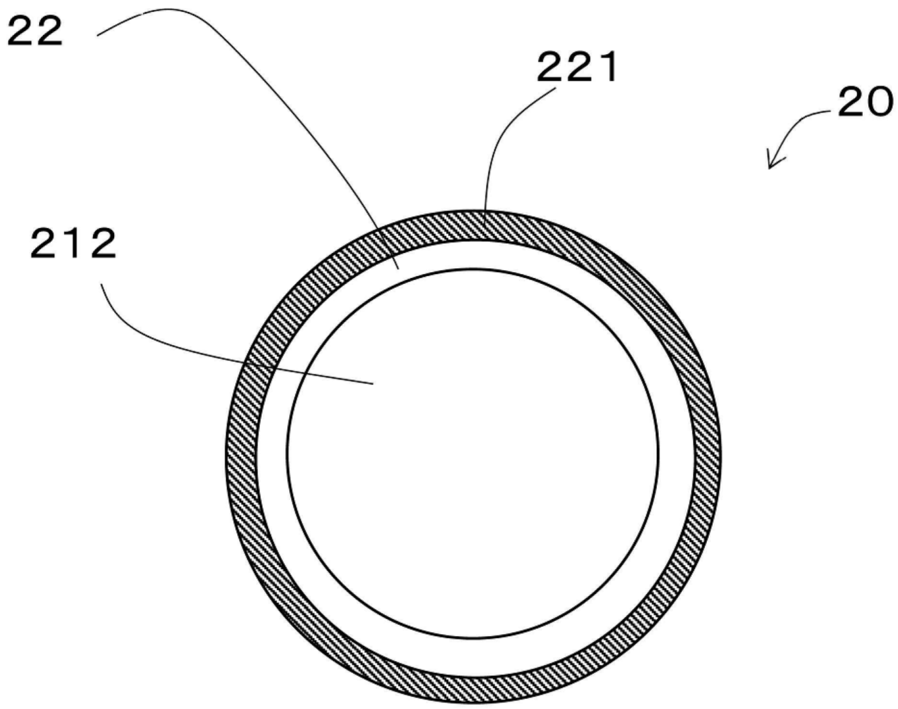


Fig. 5

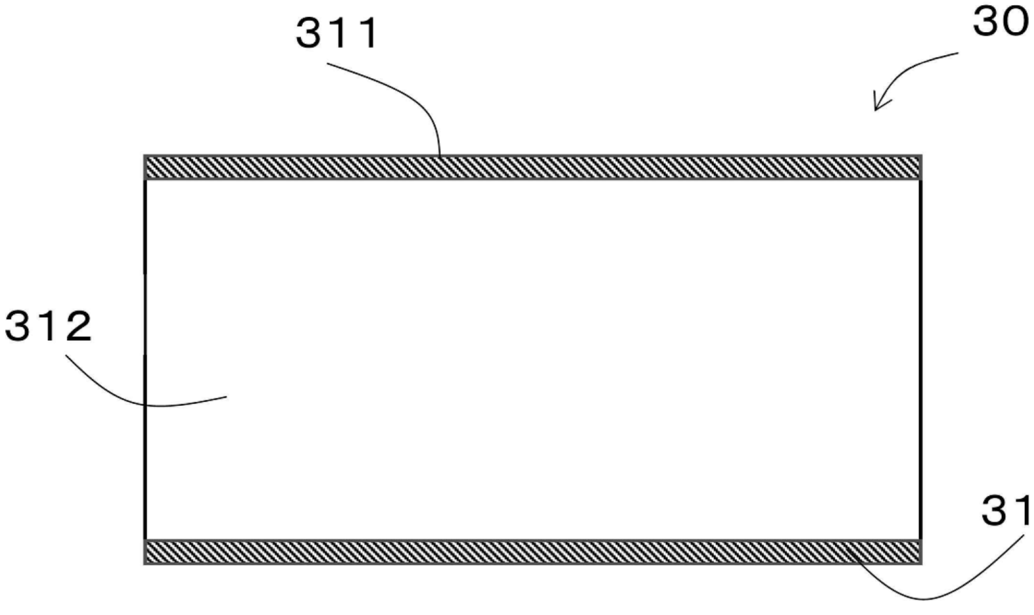

**INTERNATIONAL SEARCH REPORT**

International application No. **PCT/JP2024/019714**

**A. CLASSIFICATION OF SUBJECT MATTER**

***B32B 5/28***(2006.01)i; ***B29B 11/16***(2006.01)i; ***D04H 3/011***(2012.01)i; ***D04H 3/04***(2012.01)i
FI: B32B5/28 A; B29B11/16; D04H3/011; D04H3/04

According to International Patent Classification (IPC) or to both national classification and IPC

**B. FIELDS SEARCHED**

Minimum documentation searched (classification system followed by classification symbols)

B32B5/28; B29B11/16; D04H3/011; D04H3/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | WO 2015/151919 A1 (KB SEIREN, LTD.) 08 October 2015 (2015-10-08)<br>paragraphs [0020], [0041], [0067]-[0069], [0071]-[0072], example 3 | 1-10, 13-16<br><br>11-12 |
| A | WO 2021/215190 A1 (SEIREN CO., LTD.) 28 October 2021 (2021-10-28)<br>paragraph [0063] | 1-16 |
| A | JP 2014-083836 A (SANYU REC CO., LTD.) 12 May 2014 (2014-05-12)<br>entire text, all drawings | 1-16 |
| A | WO 2019/156033 A1 (KURARAY CO., LTD.) 15 August 2019 (2019-08-15)<br>entire text, all drawings | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 August 2024** | **27 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/019714**

| Patent document cited in search report | Publication date (day/month/year) | Patent family member(s) | Publication date (day/month/year) |
|---|---|---|---|
| WO 2015/151919 A1 | 08 October 2015 | US 2016/0355651 A1<br>paragraphs [0028], [0050], [0089], example 3<br>EP 3127694 A1<br>CN 105555521 A<br>TW 201604007 A | |
| WO 2021/215190 A1 | 28 October 2021 | US 2023/0095403 A1<br>paragraph [0078]<br>EP 4141155 A1<br>CN 115427619 A | |
| JP 2014-083836 A | 12 May 2014 | (Family: none) | |
| WO 2019/156033 A1 | 15 August 2019 | US 2020/0354858 A1<br>entire text, all drawings<br>EP 3751040 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023089882 A
- JP 6499029 B
- WO 2015151919 A